# EUROPEAN PATENT APPLICATION

(11) **EP 4 757 287 A1**
(43) Date of publication of application: **10.06.2026**
(21) Application number: 23948765.5
(22) Date of filing: 11.08.2023
(51) Int. Cl.: H04L 67/1042, G06F 21/62

(54) **COMMUNICATION METHOD AND COMMUNICATION DEVICE BASED ON BLOCKCHAIN**

(71) Applicant: HUAWEI TECHNOLOGIES CO., LTD., Shenzhen 518129 (CN)
(72) Inventor: XIAO, Xun, Shenzhen, Guangdong 518129 (CN); LIU, Fei, Shenzhen, Guangdong 518129 (CN); WANG, Donghui, Shenzhen, Guangdong 518129 (CN)
(74) Representative: Gill Jennings & Every LLP
(86) International application number: PCT/CN2023/112763
(87) International publication number: WO 2025/035330

(57) **Abstract**

Embodiments of this application provide a blockchain-based communication method and a communication apparatus, to provide an implementation solution of a decentralized communication network, where in the implementation solution, a new node pending to join a blockchain can be managed and controlled in the decentralized communication network. The method includes: A first apparatus sends first request information to a management network element, where the first request information includes a function corresponding to a smart contract SC that the first apparatus expects to deploy. The management network element sends first feedback information to the first apparatus based on the first request information, where the first feedback information includes address information of a second apparatus, and an SC deployed by the second apparatus includes a first SC in the SC that the first apparatus expects to deploy. The first apparatus obtains data of the first SC based on the address information of the second apparatus.

## Description

### TECHNICAL FIELD

This application relates to the communication field, and in particular, to a blockchain-based communication method and a communication apparatus.

### BACKGROUND

Blockchain (blockchain, BC) is a distributed ledger technology (distributed ledger technology, DLT) that integrates a plurality of technologies including cryptography, peer-to-peer (peer-to-peer, P2P) networking, and distributed-based database technologies. BC is characterized by its immutability, consensus-based mechanism, decentralized architecture, and the like. Within this framework, a smart contract (smart contract, SC) technology leverages the foregoing BC features to enable code constructed based on an SC to be a decentralized application (decentralized application, DAPP). In other words, an agreed rule or function is deployed at an account address on the BC in the form of a segment of executable code. When an invocation request is initiated to the address, the invocation request is verified in the BC under the constraint of the consensus mechanism, and code corresponding to the invocation request is executed, ensuring certainty and uniqueness of an execution result.

Currently, in a next generation 3rd generation partnership project (3rd generation partnership project, 3GPP) network (for example, a 6th generation (6th generation, 6G) communication network), an important evolution direction is to integrate BC with a 3GPP network, that is, evolve functions (for example, a network function (network function, NF)) in the 3GPP network toward DAPPs, to construct a decentralized 3GPP network. However, how to specifically implement the decentralized 3GPP network is an urgent problem to be resolved currently.

### SUMMARY

Embodiments of this application provide a blockchain-based communication method and a communication apparatus, to provide an implementation solution of a decentralized communication network. In the implementation solution, a new node pending to join a BC can be managed and controlled in the decentralized communication network.

According to a first aspect, a communication system is provided. The communication system includes a first apparatus and a management network element. The first apparatus is configured to send first request information to the management network element, where the first request information includes a function corresponding to a smart contract SC that the first apparatus expects to deploy. The management network element is configured to send first feedback information to the first apparatus based on the first request information, where the first feedback information includes address information of a second apparatus, an SC deployed by the second apparatus includes a first SC in the SC that the first apparatus expects to deploy, and the first SC is deployed on a first blockchain BC. The first apparatus is further configured to obtain data of the first SC based on the address information of the second apparatus.

In this embodiment of this application, the first apparatus may send, to the management network element, the function corresponding to the SC that the first apparatus expects to deploy, and then receive the address information of the second apparatus from the management network element, so that the first apparatus may join, based on the address information of the second apparatus, a BC that the second apparatus joins, that is, the first BC, to obtain the data of the first SC in the SC that the first apparatus expects to deploy, to deploy the first SC. In other words, for the first apparatus pending to join a BC in a decentralized communication network, the first apparatus is unaware of information about a node of a BC in the communication network and an SC deployed on the BC, and obtains the address information of the second apparatus via the management network element, to determine a BC that the first apparatus can join and an SC that the first apparatus can deploy, that is, a BC that the first apparatus joins and an SC deployed by the first apparatus are managed and controlled by the management network element. Therefore, according to a communication method provided in embodiments of this application, a new node pending to join a BC can be managed and controlled in the decentralized communication network, to implement optimization of a communication network service.

In a possible implementation, the first apparatus may be a new node pending to join a BC. The new node pending to join a BC is a new node for the BC. To be specific, the new node may be a new node that accesses the communication network, may be a node that has joined the communication network but has not joined a BC, may be a node pending to join a BC after detaching from the BC, or may be a node that has not detached from a current BC and intends to join a new BC. It should be understood that pending to join a BC may mean that the new node expects to join a BC. Alternatively, pending to join a BC may mean that the new node may join a BC in response to a request of the management network element or another network element or apparatus.

In a possible implementation, the management network element has a management function, where the management function is used to manage at least one BC, for example, deployment of an SC and control over a new node pending to join a BC. The management network element may manage and control the BC that the first apparatus joins and the SC deployed by the first apparatus. The management network element may be a core network (core network, CN) network element. The management network element may be a management plane network element, or the management network element may be a control plane network element. It may be understood that the management network element may be a new network element in a CN, for example, a ledger anchor function (ledger anchor function, LAF) network element. Further, the management network element may be an independently deployed CN network element. Alternatively, the management network element may be deployed in an overlaid manner with an existing CN network element. For example, the management network element may be deployed in an overlaid manner with an access and mobility management function network element, a network element, or a unified data management network element. It may be understood that the management network element may be deployed on a CN side, or may be deployed on an access network (radio access network, RAN) side. For example, the management network element may be deployed in a central unit (central unit, CU), a distributed unit (distributed unit, DU), an open central unit (open central unit, O-CU), an open digital unit (open digital unit, O-DU), an open radio unit (open radio unit, O-RU), or an open access network (open radio access network, O-RAN or ORAN) intelligent controller. In a possible implementation, the management network element may be independent of a BC. For example, the management network element may be a network element that does not join any BC in the communication network. In other words, the management network element may not be a node in the BC, that is, may provide the management function in a non-decentralized manner.

In a possible implementation, the management network element may be a node in a BC, and a function corresponding to an SC deployed on the BC includes the management function of the management network element. In other words, the management function of the management network element may be implemented by using the SC, and the management function is further provided in a decentralized manner.

In a possible implementation, the communication network may include one or more operator networks, and the management network element may manage BCs in the one or more operator networks. In other words, the management network element may manage the BCs across the operator networks.

In a possible implementation, the at least one BC managed by the management network element is a BC in the communication network. A device type of a node in each BC in the at least one BC may include at least one of the following: a terminal device, a RAN device, a CN device, or an independent node (independent node, INN). The INN may be a node that has a BC capability but does not participate in a wireless communication service of the terminal device and/or the RAN device, for example, an edge computing (edge computing, EC) node.

Further, the RAN device and the CN device are infrastructure in the communication network (for example, the operator network), and may jointly provide a function, for example, a network function NF, a service function, or a network access and data transmission function provided by a RAN. In other words, an SC deployed by a BC node may be used to implement a communication network function, for example, a network function-smart contract, a service function-smart contract, and a data transmission-smart contract.

In a possible implementation, that the first apparatus obtains the data of the first SC based on the address information of the second apparatus includes: The first apparatus establishes a communication connection to the second apparatus based on the address information of the second apparatus, requests to establish a BC connection to the second apparatus by deploying a BC protocol corresponding to the first BC, to join the first BC, and obtains the data of the first SC in a BC data synchronization manner, where the first BC is a BC on which the first SC is deployed, that is, the BC that the second apparatus joins. In other words, the first apparatus establishes the BC connection to the second apparatus, to obtain the data of the first SC. In this way, the first apparatus may deploy the first SC. Further, the first apparatus may establish the BC connection to the second apparatus by installing in advance the BC protocol corresponding to the first BC.

In a possible implementation, before establishing the BC connection to the second apparatus, the first apparatus may obtain the BC protocol corresponding to the first BC from a registration network element or the management network element. It may be understood that the first apparatus may alternatively obtain, via a node other than the registration network element and the management network element, for example, the second apparatus, the BC protocol corresponding to the first BC.

In a possible implementation, the communication system further includes the second apparatus. The first apparatus is further configured to send second request information to the second apparatus based on the address information of the second apparatus, where the second request information is used to request to deploy the first SC. The second apparatus is configured to send second feedback information to the first apparatus based on the second request information, where the second feedback information includes data of a BC protocol corresponding to the first BC. The first apparatus and the second apparatus are configured to synchronize BC data based on the BC protocol corresponding to the first BC, where the BC data includes the data of the first SC. In other words, the first apparatus may receive the data of the BC protocol from the second apparatus by sending the second request information to the second apparatus, to obtain the BC protocol corresponding to the first BC, that is, the first apparatus may establish a BC connection to the second apparatus without installing in advance the BC protocol corresponding to the first BC. It may be understood that in this manner, interaction signaling required for establishing the BC connection between the first apparatus and the second apparatus may be reused to obtain the BC protocol corresponding to the first BC, so that interaction with another network element may not be required, reducing signaling overheads.

In a possible implementation, the function corresponding to the SC that the first apparatus expects to deploy may include a plurality of functions. Each of the plurality of functions may correspond to one SC. In other words, the SC that the first apparatus expects to deploy may be a plurality of SCs.

In a possible implementation, the plurality of SCs that the first apparatus expects to deploy may belong to a same BC, that is, the first BC. In other words, the first apparatus may deploy, by joining one BC, the plurality of SCs that the first apparatus expects to deploy.

In a possible implementation, the plurality of SCs that the first apparatus expects to deploy may not belong to a same BC. In other words, there are a plurality of first BCs, and the first apparatus may join the plurality of first BCs and deploy the plurality of SCs that belong to different first BCs.

In a possible implementation, the first request information further includes at least one of the following: type information of the first apparatus, operating of the first apparatus, or capability information of the first apparatus. In other words, the first request information may enable the management network element to match, for the first apparatus from the SC that the first apparatus expects to deploy, an SC that is suitable for the first apparatus to deploy, reducing impact on quality of a decentralized 3GPP network service. Optionally, the management network element may alternatively obtain the type information, the operating, the capability information, or the like of the first apparatus via another network element. For example, the management network element may obtain access and mobility management function registration information of the first apparatus via the unified data management network element, to obtain the type information of the first apparatus.

In a possible implementation, the type information of the first apparatus specifically includes a device type of the first apparatus and/or a participant role type of the first apparatus in the SC that the first apparatus expects to deploy. The device type of the first apparatus may include a terminal device, a RAN device, a CN device, or the like. It may be understood that the management network element may determine, based on the device type of the first apparatus, whether the function corresponding to the SC that the first apparatus expects to deploy matches the first apparatus. For example, the first apparatus is a terminal device, and the function corresponding to the SC that the first apparatus expects to deploy includes an access and mobility management function and an application function. Due to mobility of the terminal device, a 3GPP network may not expect the terminal device to deploy an AMF-SC, so that the management network element may determine that the first apparatus can deploy an AF-SC.

In a possible implementation, the participant role type in the SC may include at least one of the following: a verification role, a transaction role, a backup role, or a network access provision role. The transaction role is used to generate a transaction request. The verification role is used to verify the transaction request. The backup role may be a role that does not participate in a transaction or verification and only backs up the BC data. The network access role mainly provides a network access service for users.

In a possible implementation, the SC that the first apparatus expects to deploy is the plurality of SCs, and the participant role type of the first apparatus in the SC that the first apparatus expects to deploy may include a participant role type corresponding to the first apparatus in each of the plurality of SCs. For example, the SC that the first apparatus expects to deploy is SC #1, SC #2, and SC #3, and the participant role type of the first apparatus in the SC that the first apparatus expects to deploy may include a participant role type in SC #1, a participant role type in SC #2, and a participant role type in SC #3.

In a possible implementation, the operating of the first apparatus specifically includes online duration estimated by the first apparatus and/or an online time period estimated by the first apparatus. The online duration may be shortest network duration that the first apparatus estimates the first apparatus can contribute in the BC, for example, 0.5 hours, 1 hour, or 1.5 hours. The online time period estimated by the first apparatus may be a time period during which the first apparatus estimates the first apparatus may be online in the BC, for example, 10:00 to 12:00. It may be understood that to ensure the quality of the decentralized network service, network duration that a node in the network contributes in a BC should be greater than or equal to a first time threshold. For example, the first time threshold may be 1 hour, 2 hours, 3 hours, or a longer time.

In a possible implementation, the capability information of the first apparatus specifically includes at least one of the following: a computing capability of the first apparatus, a storage capability of the first apparatus, or a network connection capability of the first apparatus. The computing capability of the first apparatus may be a computing speed (for example, a CPU frequency), a calculation capability, or the like of the first apparatus. The storage capability of the first apparatus may be a memory size, a local memory size, a read/write rate (or referred to as a read/write bandwidth), or the like of the first apparatus. The network connection capability of the first apparatus may be a network connection type provided by the first apparatus, for example, a 3GPP access connection, a Wi-Fi connection, a Bluetooth connection, or a wired connection.

In a possible implementation, the management network element is further configured to: determine the first SC from a candidate SC set based on the first request information and a matching condition corresponding to at least one SC in the candidate SC set; and determine the address information of the second apparatus based on the first SC. It may be understood that a function corresponding to the SC in the candidate SC set is the same as the function corresponding to the SC that the first apparatus expects to deploy. Each SC in the candidate SC set may have a matching condition, or a part of SCs in the candidate SC set may not have a matching condition.

In a possible implementation, the candidate SC set is obtained from the registration network element, and the registration network element is configured to store an SC deployed on each of a plurality of BCs managed by the management network element. The registration network element may be the foregoing UDM network element, an NRF network element, or another network element. In other words, the management network element may obtain the candidate SC set by querying the registration network element.

In a possible implementation, the matching condition corresponding to the at least one SC in the candidate SC set is preconfigured. Alternatively, the matching condition corresponding to the at least one SC in the candidate SC set is obtained from the registration network element, and the registration network element is configured to store the SC deployed on each of the plurality of BCs managed by the management network element and a matching condition corresponding to the SC deployed on each of the plurality of BCs. A function corresponding to the registration network element may also be implemented by using the SC, and the registration function is further provided in a decentralized manner. In other words, the candidate SC set and/or the matching condition corresponding to the at least one SC in the candidate SC set may be obtained from a BC node deploying a registration function-SC.

In a possible implementation, the matching condition may include at least one of the following: deployment-prohibited type information corresponding to the SC, deployment-prohibited operating corresponding to the SC, or deployment-prohibited capability information corresponding to the SC. It may be understood that the deployment-prohibited type information corresponding to the SC may alternatively be deployment-allowed type information corresponding to the SC. The deployment-prohibited operating corresponding to the SC may alternatively be deployment-allowed operating corresponding to the SC. The deployment-prohibited capability information corresponding to the SC may alternatively be deployment-allowed capability information corresponding to the SC, or the like. The type information may include a device type and/or a participant role type in the SC. The operating may include online duration and/or an online time period. The capability information may include a computing capability, a storage capability, or a network connection capability.

In a possible implementation, the second apparatus may be any node in the first BC.

In a possible implementation, the second apparatus may be a node in the first BC that can establish a communication connection to the first apparatus. For example, if the device type of the first apparatus is a 3GPP terminal device, the second apparatus may be a RAN device or an AMF network element closest to the first apparatus in a physical and/or logical topology. For another example, if the device type of the first apparatus is a non-3GPP terminal device, the second apparatus may be an N3G-GW closest to the first apparatus in a physical and/or logical topology. For another example, the first apparatus and the second apparatus may be located in a same operator network or PLMN. In other words, the management network element may select, from the first BC, a node that can directly establish a communication connection to the first apparatus as the second apparatus. In this way, a communication delay can be reduced, and occupation of network resources can be reduced.

In a possible implementation, the first feedback information may further include information indicating the first SC. The information indicating the first SC may be, for example, a function corresponding to the first SC, a function type corresponding to the first SC, or an ID of the first SC. This is not specifically limited in embodiments of this application. It may be understood that when the SC that the first apparatus expects to deploy is the plurality of SCs that the first apparatus expects to deploy, the first apparatus may determine, by using the information indicating the first SC, SCs in the plurality of SCs that the management network element agrees to deploy.

In a possible implementation, there are a plurality of first SCs, and the information indicating the first SC may include information indicating each of the plurality of first SCs.

In a possible implementation, there are a plurality of first SCs, and the address information of the second apparatus may include address information of a second apparatus corresponding to each of the plurality of first SCs.

In a possible implementation, the first feedback information further includes first identity information, and the first identity information is information indicating an identity of the first apparatus. The second request information further includes the first identity information.

In a possible implementation, the management network element is further configured to send second identity information to the second apparatus, where the second identity information is information used by another apparatus to determine the identity of the first apparatus, and the another apparatus is an apparatus other than the first apparatus. The second apparatus is further configured to send second feedback information to the first apparatus when determining, based on the second identity information, that identity authentication of the first apparatus succeeds. It may be understood that the first identity information and the second identity information may be matched, that is, the second identity information may be used to verify whether the first identity information is correct. For example, the first identity information may be a token (token), the second identity information may also be a token (token), and there is a one-to-one correspondence between the first identity information and the second identity information. Alternatively, the first identity information may be an identity ID of the first apparatus, and the second identity information may also be an identity ID of the first apparatus. In this case, when the second request information includes the identity ID of the first apparatus, and the identity ID of the first apparatus is the same as the identity ID of the first apparatus that is sent by the management network element to the second apparatus, the second apparatus may determine that identity authentication of the first apparatus succeeds.

In a possible implementation, the first apparatus is further configured to send a participant role of the first apparatus in the first SC to a BC node in the first BC, where the participant role includes at least one of the following: a verification role, a transaction role, a backup role, or a network access provision role. It should be understood that for the decentralized network, after the new first apparatus joins the first BC and deploys the first SC, the first BC on which the first SC is deployed changes. In this implementation, each node in the first BC can synchronize status changes of the first BC and the first SC.

In a possible implementation, the first apparatus is further configured to send the online duration estimated by the first apparatus, the capability information of the first apparatus, and the like to the BC node in the first BC, so that another node in the first BC synchronizes a status of the first apparatus. This facilitates execution of the SC deployed on the first BC, and can improve the quality of the decentralized 3GPP network service.

In a possible implementation, the first apparatus is further configured to send registration information to the registration network element or the management network element, where the registration information includes at least one of the following: information identifying the BC that the first apparatus joins, information indicating the SC deployed by the first apparatus, or a participant role of the first apparatus in the SC deployed by the first apparatus. The information identifying the BC that the first apparatus joins may be, for example, an ID of the BC that the first apparatus joins, or information about a node in the BC. The information indicating the SC deployed by the first apparatus may include, for example, an ID of the SC, a function corresponding to the SC, or a matching condition corresponding to the SC. In other words, the first apparatus sends the registration information to the registration network element or the management network element, so that the management network element can obtain latest change information of a BC in a current 3GPP network directly or via the registration management network element, to synchronize the latest change information of the BC in the 3GPP network, for example, information about a new node in the BC, a status of a deployed SC, and a participant role of the new node in the deployed SC. In this way, the management network element can manage and control the BC in the network and a new node pending to join the BC.

In a possible implementation, the first apparatus is further configured to send network exit information to the management network element, where the network exit information indicates a BC from which the first apparatus expects to exit. The management network element is further configured to delete, based on the network exit information, registration information of the first apparatus in the BC from which the first apparatus expects to exit. In other words, when expecting to detach from the BC, the first apparatus may send the network exit information to the management network element responsible for managing the BC, so that the management network element can synchronize a status of the BC in time, to avoid a conflict and ensure the quality of the decentralized network service.

In a possible implementation, the management network element is further configured to: send deregistration request information to the registration network element, where the deregistration request information includes information indicating the BC from which the first apparatus expects to exit; and receive a deregistration request confirmation message from the registration network element, where the deregistration request confirmation message is used to confirm that the registration information of the first apparatus in the BC from which the first apparatus expects to exit has been deleted. It may be understood that the management network element may place data related to the BC in the 3GPP network into the registration network element for unified storage and maintenance, so that storage load of the management network element can be reduced. Therefore, when the management network element deletes the registration information of the first apparatus in the BC from which the first apparatus expects to exit, deletion is performed via the registration network element.

In a possible implementation, the management network element is further configured to send network exit confirmation information to the first apparatus, where the network exit confirmation information is used to confirm that the registration information of the first apparatus in the BC from which the first apparatus expects to exit has been deleted. The first apparatus is further configured to receive the network exit confirmation information from the management network element. It may be understood that after deleting the registration information of the first apparatus in the BC from which the first apparatus expects to exit, the management network element sends the network exit confirmation information to the first apparatus to indicate that the network has made related preparations for the first apparatus to detach from the BC and notify the first apparatus that the first apparatus can detach from the BC. It should be understood that the first apparatus may delete, based on the network exit confirmation information, BC data, for example, ledger data, of the BC from which the first apparatus expects to exit. The first apparatus may stop a BC protocol program script corresponding to the BC from which the first apparatus expects to exit. Optionally, the first apparatus may further send deletion confirmation information to the management network element, where the deletion confirmation information is used to confirm that the BC data of the BC from which the first apparatus expects to exit has been deleted from the first apparatus.

In a possible implementation, after receiving the network exit information sent by the first apparatus, the management network element may broadcast the network exit information to the BC from which the first apparatus expects to exit, so that each node in the BC from which the first apparatus expects to exit can synchronize a latest status of the BC.

In a possible implementation, the management network element is further configured to send network exit indication information to the second apparatus based on the network exit information, where the network exit indication information indicates that the first apparatus detaches from the BC from which the first apparatus expects to exit. The second apparatus is further configured to receive the network exit indication information from the management network element. In other words, the second apparatus may receive the network exit indication information from the management network element, to synchronize the latest status of the BC with the management network element.

In a possible implementation, the second apparatus is further configured to broadcast, based on the network exit indication information, the network exit indication information to a BC node other than the first apparatus in the BC from which the first apparatus expects to exit. It should be understood that to reduce storage overheads, the management network element or the registration network element may store only address information of an entry node (that is, the second apparatus) corresponding to each BC, and the management network element sends the network exit indication information to the second apparatus, so that the second apparatus broadcasts the network exit indication information to each node in the BC, to synchronize the latest status of the BC.

According to a second aspect, a communication method is provided. The method may be performed by a first apparatus, may be performed by a component of a first apparatus, for example, a processor, a chip, or a chip system of the first apparatus, or may be implemented by a logic module or software that can implement all or a part of functions of a first apparatus. The following uses an example in which the method is performed by the first apparatus for description. The method includes: The first apparatus sends first request information to a management network element, where the first request information includes a function corresponding to a smart contract SC that the first apparatus expects to deploy. The first apparatus receives first feedback information from the management network element, where the first feedback information includes address information of a second apparatus, an SC deployed by the second apparatus includes a first SC in the SC that the first apparatus expects to deploy, and the first SC is deployed on a first blockchain BC. The first apparatus obtains data of the first SC based on the address information of the second apparatus.

In a possible implementation, the first request information further includes at least one of the following: type information of the first apparatus, operating of the first apparatus, or capability information of the first apparatus.

In a possible implementation, the type information of the first apparatus specifically includes a device type of the first apparatus and/or a participant role type of the first apparatus in the SC that the first apparatus expects to deploy. The operating of the first apparatus specifically includes online duration estimated by the first apparatus and/or an online time period estimated by the first apparatus. The capability information of the first apparatus specifically includes at least one of the following: a computing capability of the first apparatus, a storage capability of the first apparatus, or a network connection capability of the first apparatus.

In a possible implementation, that the first apparatus obtains the data of the first SC based on the address information of the second apparatus includes: The first apparatus sends second request information to the second apparatus based on the address information of the second apparatus, where the second request information is used to request to deploy the first SC. The first apparatus receives second feedback information from the second apparatus, where the second feedback information includes data of a BC protocol corresponding to the first BC. The first apparatus synchronizes BC data with the second apparatus based on the BC protocol corresponding to the first BC, where the BC data includes the data of the first SC.

In a possible implementation, the first feedback information further includes first identity information, and the first identity information is information indicating an identity of the first apparatus. The second request information further includes the first identity information.

In a possible implementation, the method provided in the second aspect further includes: The first apparatus sends a participant role of the first apparatus in the first SC to a BC node in the first BC, where the participant role includes at least one of the following: a verification role, a transaction role, a backup role, or a network access provision role.

In a possible implementation, the method provided in the second aspect further includes: The first apparatus sends registration information to a registration network element or the management network element, where the registration information includes at least one of the following: information identifying a BC that the first apparatus joins, information indicating an SC deployed by the first apparatus, or a participant role of the first apparatus in the SC deployed by the first apparatus.

In a possible implementation, the method provided in the second aspect further includes: The first apparatus sends network exit information to the management network element, where the network exit information indicates a BC from which the first apparatus expects to exit.

In a possible implementation, the method provided in the second aspect further includes: The first apparatus receives network exit confirmation information from the management network element, where the network exit confirmation information is used to confirm that registration information of the first apparatus in the BC from which the first apparatus expects to exit has been deleted.

For technical effects of the second aspect or any one of the implementations of the second aspect, refer to the first aspect. Details are not described herein again.

According to a third aspect, a communication method is provided. The method may be performed by a management network element, may be performed by a component of a management network element, for example, a processor, a chip, or a chip system of the management network element, or may be implemented by a logic module or software that can implement all or a part of functions of a management network element. The following uses an example in which the method is performed by the management network element for description. The method includes: The management network element receives first request information from a first apparatus, where the first request information includes a function corresponding to a smart contract SC that the first apparatus expects to deploy. The management network element determines address information of a second apparatus based on the first request information, where an SC deployed by the second apparatus includes a first SC in the SC that the first apparatus expects to deploy. The management network element sends first feedback information to the first apparatus, where the first feedback information includes the address information of the second apparatus.

In a possible implementation, the first request information further includes at least one of the following: type information of the first apparatus, operating of the first apparatus, or capability information of the first apparatus.

In a possible implementation, the type information of the first apparatus specifically includes a device type of the first apparatus and/or a participant role type of the first apparatus in the SC that the first apparatus expects to deploy. The operating of the first apparatus specifically includes online duration estimated by the first apparatus and/or an online time period estimated by the first apparatus. The capability information of the first apparatus specifically includes at least one of the following: a computing capability of the first apparatus, a storage capability of the first apparatus, or a network connection capability of the first apparatus.

In a possible implementation, that the management network element determines the address information of the second apparatus based on the first request information includes: The management network element determines the first SC from a candidate SC set based on the first request information and a matching condition corresponding to at least one SC in the candidate SC set. The management network element determines the address information of the second apparatus based on the first SC.

In a possible implementation, the candidate SC set is obtained from a registration network element, and the registration network element is configured to store an SC deployed on each of a plurality of blockchains BCs managed by the management network element.

In a possible implementation, the matching condition corresponding to the at least one SC in the candidate SC set is preconfigured. Alternatively, the matching condition corresponding to the at least one SC in the candidate SC set is obtained from the registration network element, and the registration network element is configured to store the SC deployed on each of the plurality of BCs managed by the management network element and a matching condition corresponding to the SC deployed on each of the plurality of BCs.

In a possible implementation, the method provided in the third aspect further includes: The management network element sends second identity information to the second apparatus, where the second identity information is information used by another apparatus to determine an identity of the first apparatus, and the another apparatus is an apparatus other than the first apparatus.

In a possible implementation, the first feedback information further includes first identity information, and the first identity information is information indicating the identity of the first apparatus.

In a possible implementation, the method provided in the third aspect further includes: The management network element receives network exit information from the first apparatus, where the network exit information indicates a BC from which the first apparatus expects to exit. The management network element deletes, based on the network exit information, registration information of the first apparatus in the BC from which the first apparatus expects to exit.

In a possible implementation, that the management network element deletes, based on the network exit information, the registration information of the first apparatus in the BC from which the first apparatus expects to exit includes: The management network element sends deregistration request information to the registration network element, where the deregistration request information includes information indicating the BC from which the first apparatus expects to exit. The management network element receives a deregistration request confirmation message from the registration network element, where the deregistration request confirmation message is used to confirm that the registration information of the first apparatus in the BC from which the first apparatus expects to exit has been deleted.

In a possible implementation, the method provided in the third aspect further includes: The management network element sends network exit indication information to the second apparatus based on the network exit information, where the network exit indication information indicates that the first apparatus detaches from the BC from which the first apparatus expects to exit.

In a possible implementation, the method provided in the second aspect further includes: The management network element sends network exit confirmation information to the first apparatus, where the network exit confirmation information is used to confirm that the registration information of the first apparatus in the BC from which the first apparatus expects to exit has been deleted.

For technical effects of the third aspect or any one of the implementations of the third aspect, refer to the first aspect. Details are not described herein again.

According to a fourth aspect, a communication method is provided. The method may be performed by a second apparatus, may be performed by a component of a second apparatus, for example, a processor, a chip, or a chip system of the second apparatus, or may be implemented by a logic module or software that can implement all or a part of functions of a second apparatus. The following uses an example in which the method is performed by the second apparatus for description. The method includes: The second apparatus receives second request information from a first apparatus, where the second request information is used to request to deploy a first SC in a smart contract SC that the first apparatus expects to deploy, an SC deployed by the second apparatus includes the first SC, and the first SC is deployed on a first blockchain BC. The second apparatus sends second feedback information to the first apparatus based on the second request information, where the second feedback information includes data of a BC protocol corresponding to the first BC. The second apparatus synchronizes BC data with the first apparatus based on the BC protocol corresponding to the first BC, where the BC data includes data of the first SC.

In a possible implementation, the method provided in the fourth aspect further includes: The second apparatus receives second identity information from a management network element, where the second identity information is information used by another apparatus to determine an identity of the first apparatus, a BC managed by the management network element includes a BC that the second apparatus joins, and the another apparatus is an apparatus other than the first apparatus. Correspondingly, that the second apparatus sends the second feedback information to the first apparatus based on the second request information includes: The second apparatus sends the second feedback information to the first apparatus when the second apparatus determines, based on the second identity information, that identity authentication of the first apparatus succeeds.

In a possible implementation, the second request information further includes first identity information, and the first identity information is information indicating the identity of the first apparatus.

In a possible implementation, the method provided in the fourth aspect further includes: The second apparatus obtains network exit indication information, where the network exit indication information indicates that the first apparatus detaches from a BC from which the first apparatus expects to exit.

In a possible implementation, the network exit indication information is obtained from the management network element, and the BC managed by the management network element includes the BC that the second apparatus joins. The method provided in the fourth aspect further includes: The second apparatus broadcasts, based on the network exit indication information, the network exit indication information to a BC node other than the first apparatus in the BC from which the first apparatus expects to exit.

For technical effects of the fourth aspect or any one of the implementations of the fourth aspect, refer to the first aspect. Details are not described herein again.

According to a fifth aspect, a communication apparatus is provided, to implement the foregoing methods. The communication apparatus may be the first apparatus in the second aspect or any one of the implementations of the second aspect, an apparatus including the first apparatus, or an apparatus included in the first apparatus, for example, a chip. Alternatively, the communication apparatus may be the management network element in the third aspect or any one of the implementations of the third aspect, an apparatus including the management network element, or an apparatus included in the management network element, for example, a chip. Alternatively, the communication apparatus may be the second apparatus in the fourth aspect or any one of the implementations of the fourth aspect, an apparatus including the second apparatus, or an apparatus included in the second apparatus, for example, a chip. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a sixth aspect, a communication apparatus is provided, including at least one processor. The processor is configured to execute, via a logic circuit and/or through communication, a computer program or instructions stored in a memory, so that the communication apparatus performs the method according to any one of the foregoing aspects.

In a possible implementation, the communication apparatus further includes the memory. Optionally, the memory is integrated with the processor, or the memory may be independent of the processor.

In a possible implementation, the memory is independent of the communication apparatus.

In a possible implementation, the communication apparatus further includes a communication interface, and the communication interface is configured to communicate with a module other than the communication apparatus.

The communication apparatus may be the first apparatus in the second aspect or any one of the implementations of the second aspect, an apparatus including the first apparatus, or an apparatus included in the first apparatus, for example, a chip. Alternatively, the communication apparatus may be the management network element in the third aspect or any one of the implementations of the third aspect, an apparatus including the management network element, or an apparatus included in the management network element, for example, a chip. Alternatively, the communication apparatus may be the second apparatus in the fourth aspect or any one of the implementations of the fourth aspect, an apparatus including the second apparatus, or an apparatus included in the second apparatus, for example, a chip.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the foregoing aspects or any one of the implementations of the foregoing aspects.

According to an eighth aspect, a computer program product including instructions is provided. When the computer program product is run on a communication apparatus, the communication apparatus is enabled to perform the method according to any one of the foregoing aspects or any one of the implementations of the foregoing aspects.

According to a ninth aspect, a communication apparatus is provided (for example, the communication apparatus may be a chip or a chip system). The communication apparatus includes a processor, configured to implement the functions in any one of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus provided in any one of the fifth aspect to the ninth aspect is a chip, the foregoing sending action/function may be understood as outputting, and the foregoing receiving action/function may be understood as inputting.

For technical effects brought by any design manner in the fifth aspect to the ninth aspect, refer to the technical effects brought by different design manners in the first aspect. Details are not described herein again.

According to a tenth aspect, a communication method is provided. The communication method includes the method according to any one of the second aspect or the implementations of the second aspect and the method according to any one of the third aspect or the implementations of the third aspect.

In some possible designs, the communication method further includes the method according to any one of the fourth aspect or the implementations of the fourth aspect.

### BRIEF DESCRIPTION OF DRAWINGS

FIG. 1 is a diagram of a communication architecture of a 3GPP network according to an embodiment of this application;
FIG. 2 is a diagram of an architecture of a decentralized communication network according to an embodiment of this application;
FIG. 3 is a diagram in which a new node joins a BC in a decentralized communication network according to an embodiment of this application;
FIG. 4 is a diagram of an architecture of a communication system according to an embodiment of this application;
FIG. 5 is a diagram of a structure of a communication apparatus according to an embodiment of this application;
FIG. 6 is a schematic flowchart 1 of a communication method according to an embodiment of this application;
FIG. 7 is a diagram of a matching procedure according to an embodiment of this application;
FIG. 8 is a schematic flowchart 2 of a communication method according to an embodiment of this application;
FIG. 9 is a schematic flowchart 3 of a communication method according to an embodiment of this application;
FIG. 10 is a schematic flowchart 4 of a communication method according to an embodiment of this application;
FIG. 11 is a diagram of a structure of a first apparatus according to an embodiment of this application;
FIG. 12 is a diagram of a structure of a management network element according to an embodiment of this application; and
FIG. 13 is a diagram of a structure of a second apparatus according to an embodiment of this application.

### DESCRIPTION OF EMBODIMENTS

For ease of understanding technical solutions provided in embodiments of this application, technologies related to this application are first described briefly. The brief descriptions are as follows.

### 1. Blockchain (blockchain, BC)

BC is a distributed ledger technology (distributed ledger technology, DLT) that integrates a plurality of technologies including cryptography, peer-to-peer (peer-to-peer, P2P) networking, and distributed-based database technologies. BC is characterized by its immutability, consensus-based mechanism, decentralized architecture, and the like. Within this framework, a smart contract (smart contract, SC), which is a segment of executable code, leverages the foregoing BC features to enable code constructed based on an SC to be a decentralized application (decentralized application, DAPP). In other words, an agreed rule or function is deployed at an account address on the BC in the form of a segment of executable code. When an invocation request is initiated to the address, the invocation request is verified in the BC under the constraint of the consensus mechanism, and code corresponding to the invocation request is executed, ensuring certainty and uniqueness of an execution result.

The following describes some solutions related to a new node joining a BC and deploying an SC.

### 2. Solution for a node in internet (internet) joining a BC

For a new node in internet joining a BC, a manner in which the node joins the BC and deploys an SC is open-environment joining with no admission condition. For example, the new node may install in advance a BC protocol corresponding to a BC that the new node expects to join, select to install a related configuration (for example, a digital signature or a verification tool), then establish, over the internet, a connection to a node in the BC that the new node expects to join, then synchronize BC data by using the BC protocol, and deploy, through BC data synchronization, an SC included in the BC data. Further, after joining the BC that the new node expects to join, the new node itself may configure a participant role of the new node in the SC. It should be understood that a plurality of SCs may be deployed on one BC, that is, the new node may select to deploy one or more of the plurality of SCs.

### 3. Solution for a node in a consortium blockchain joining a BC

Unlike the foregoing open-environment joining over an internet with no admission condition, a joining manner for the consortium blockchain requires permissions of consortium members (consortium members) of a BC to join the BC. In other words, the solution for a node in a consortium blockchain joining a BC is designed for a node that is not a consortium member of the BC. However, there is no corresponding control and management solution for a child node of a consortium member of the BC.

### 4. Communication network service

Embodiments of this application provide a decentralized communication network, for example, a decentralized 3GPP network. The network may provide a decentralized 3GPP network service (also referred to as a 3GPP network function or a 3GPP network service function). A function in the 3GPP network may include an NF and a service function. The NF may include a function corresponding to a core network (core network, CN), for example, an access and mobility management function (access and mobility management function, AMF), an authentication server function (authentication server function, AUSF), a session management function (session management function, SMF), a network exposure function (network exposure function, NEF) network element, a network function repository function (NF repository function, NRF), a policy control function (policy control function, PCF), unified data management (unified data management, UDM), an application function (application function, AF), a user plane function (user plane function, UPF), or a network slice selection function (network slice selection function, NSSF). The service function may include a function corresponding to a third-party service. The third-party service is, for example, an internet of things service, a satellite communication service, or a cloud service. This is not specifically limited in embodiments of this application.

In the decentralized 3GPP network, the decentralized 3GPP network service may mean that the function in the 3GPP network is deployed on a node having a BC capability in the 3GPP network in a manner of a DAPP (that is, an SC). Specifically, a ledger function is deployed on the node having the BC capability (for example, a terminal device, a radio access network (radio access network, RAN) device, a core network (core network, CN) device, and a functional network element) in the 3GPP network. Each node located in a same BC in the 3GPP network synchronizes BC data (or referred to as ledger data), where the BC data includes data of an SC, so that each node deploys the SC, and performs, under a constraint of a consensus mechanism, a function corresponding to the SC. The function corresponding to the SC may include the 3GPP network function, that is, the SC deployed by each node provides the network service. It may be understood that due to the characteristic of decentralization of the BC, driven by the consensus mechanism, a malicious or incorrect behavior of a single node does not affect a final execution result of the SC, so that robustness and an attack defense capability of the 3GPP network can be enhanced.

Further, due to the characteristic of decentralization of the BC, each node in the 3GPP network participates in BC data query, transaction, backup, consensus, operation and maintenance, or the like to different degrees. Considering that the node in the 3GPP network has characteristics of high heterogeneous complexity and high dynamicity, to implement optimization of the 3GPP network service, in a specific implementation of the decentralized 3GPP network, the 3GPP network needs to manage and control a node joining the BC in the 3GPP network. For example, when the node in the 3GPP network changes, a new node pending to join the BC appears in the 3GPP network. If a device type of the new node does not meet a deployment requirement of the SC in the 3GPP network, it is difficult to implement optimization of the 3GPP network service after the new node joins the BC and deploys the SC.

For the solution for a node joining a BC through an internet (internet), joining the BC is a voluntary behavior of the new node, and there is no admission and permission mechanism for the new node. In other words, a BC network cannot control and admit the new node, and cannot control the new node to deploy a specific SC.

Further, because the behavior of the new node joining the BC and the deployed SC are decided by the new node, and cannot be controlled, for example, from a perspective of the deployment requirement of the SC in the 3GPP network, it is difficult to implement optimization of the 3GPP network service in the foregoing solution for joining a BC.

For the solution for a node joining a BC in a consortium chain, a network has become a consortium member of the BC, and a new node in the network, that is, a child node of the consortium member of the BC, is automatically considered as a consortium member of the BC. Therefore, the new node cannot be controlled and regulated in the foregoing joining solution for a node in a consortium chain.

Further, for the 3GPP network, the node in the network has the characteristics of high heterogeneous complexity and high dynamicity. For example, the node in the 3GPP network may be a terminal device, where the terminal device may be in a high-speed moving state, and the terminal device continuously leaves and accesses a cell. For another example, the node in the 3GPP network may be a RAN device, where a quantity of terminal devices accessing the RAN device may constantly change, that is, load of the RAN device dynamically changes. In other words, due to the foregoing characteristics of the node in the 3GPP network, the new node in the 3GPP network may not meet the deployment requirement of the SC in the 3GPP network currently. That is, in a scenario of the foregoing decentralized 3GPP network, even if the new node is already a consortium member of the BC, the new node needs to be controlled and managed to join the BC, and the SC deployed on the BC needs to be controlled and managed.

In conclusion, the foregoing related solutions for a new node joining a BC do not include a specific solution for the decentralized 3GPP network. Therefore, how to manage and control, in the decentralized 3GPP network, a new node pending to join a BC is still a problem that needs to be urgently resolved currently.

Based on this, an embodiment of this application provides a communication method, to manage and control, in a decentralized 3GPP network, a new node pending to join a BC.

The following describes the technical solutions in embodiments of this application with reference to the accompanying drawings in embodiments of this application.

For ease of understanding embodiments of this application, the following descriptions are provided before embodiments of this application are described.
1. In embodiments of this application, a 3GPP network may include an operator network. The 3GPP network may include one or more operator networks.
2. In embodiments of this application, a "network element" and a "node" may be logical entities or physical entities. In other words, in embodiments of this application, "apparatus" and "network element" may be replaced for description. This is uniformly described herein, and details are not described below again.
3. In embodiments of this application, for ease of description, when numbering or indexing is involved, numbering may be performed consecutively starting from 1, may be performed consecutively starting from 0, or may be performed starting from any parameter.
4. "Predefinition", "preconfiguration", or "agreement in a protocol" may be implemented by pre-storing corresponding code, a table, or another manner that may indicate related information in a device (for example, a first apparatus, a management network element, or a second apparatus), a specific implementation of which is not limited in embodiments of this application. "Storing" may mean storing in one or more memories.
5. A "protocol" in embodiments of this application may be a standard protocol in the communication field, for example, may include a long term evolution (long term evolution, LTE) protocol, a new radio (new radio, NR) protocol, and a related protocol applied to a future communication system (for example, a 6G communication system). This is not limited in embodiments of this application.
6. In embodiments of this application, descriptions such as "when...", "in a case of...", and "if" all mean that a device (for example, a first apparatus, a management network element, or a second apparatus) performs corresponding processing in an objective case. These descriptions are not intended to limit time, do not require the device to perform a determining action during implementation, and do not mean that there is another limitation.
7. In embodiments of this application, "sending information to... (a management network element)" may be understood as that a destination end of the information is the management network element, and may include directly or indirectly sending the information to the management network element. "Receiving, from... (a first apparatus), information" or "receiving information from... (a first apparatus)" may be understood as that a source end of the information is the first apparatus, and may include directly or indirectly receiving the information from the first apparatus. Information may undergo necessary processing, for example, a format change, between a source end and a destination end for sending of the information. However, the destination end may understand valid information from the source end. A similar expression in this application may be understood similarly, and details are not described herein again.
8. In descriptions of embodiments of this application, unless otherwise specified, "and/or" in embodiments of this application represents that three relationships may exist. For example, "A and/or B" may represent the following three cases: Only A exists, both A and B exist, and only B exists, where A and B may be singular or plural. In addition, "at least one of the following items (pieces)" or a similar expression means any combination of these items, including a single item (piece) or any combination of a plurality of items (pieces). In addition, to clearly describe the technical solutions in embodiments of this application, words such as "first" and "second" are used in embodiments of this application to distinguish between same items or similar items that have basically a same function and effect. A person skilled in the art may understand that the words such as "first" and "second" do not limit a quantity and an execution sequence, and the words such as "first" and "second" do not indicate a definite difference. In addition, in embodiments of this application, terms such as "example" or "for example" are used to represent giving an example, an illustration, or a description.

Embodiments of this application may be applied to an LTE system or an NR system (which may also be referred to as a 5th generation (5th generation, 5G) system), an LTE-NR hybrid networking system, an internet of vehicles (vehicle-to-everything, V2X) system, a device-to-device (device-to-device, D2D) system, a machine-to-machine (machine-to-machine, M2M) communication system, an internet of things (internet of things, IoT) system (for example, a narrowband internet of things (narrowband internet of things, NB-IoT) system), a system evolved after 5G such as a 6G system, another next generation communication system, and the like. Alternatively, the communication system may be an open radio access network (open radio access network, O-RAN or ORAN), a cloud radio access network (cloud RAN, CRAN), or a wireless fidelity (wireless fidelity, Wi-Fi) system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the communication architecture and the emergence of new service scenarios, the technical solutions provided in embodiments of this application are also applicable to similar technical problems.

The following describes a communication architecture of a 3GPP network by using an example.

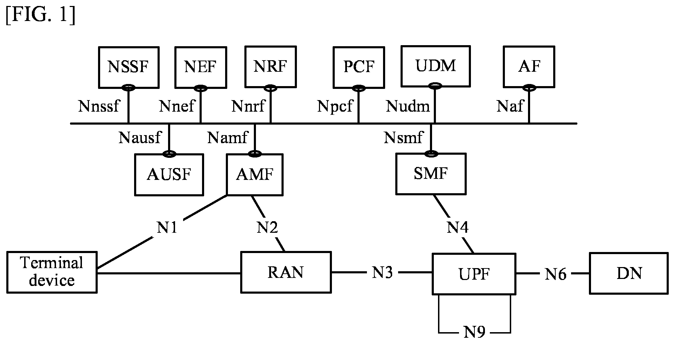

FIG. 1 is a diagram of a communication architecture of a 3GPP network according to an embodiment of this application. As shown in FIG. 1, the communication architecture of the 3GPP network includes an access network (access network, AN) and a CN, and may further include a terminal device.

In a possible implementation, the terminal device in this embodiment of this application may be a device configured to implement a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like.

In a possible implementation, the AN is used to implement an access-related function, may provide a network access function for an authorized user in a specific region, and can determine transmission links of different quality based on a user level, a service requirement, and the like, to transmit user data. The AN forwards control data and the user data between the terminal device and the CN. The AN may include a radio access network device, which may also be referred to as a RAN device or a RAN node.

Further, in a possible implementation, the RAN device may be a transmission and reception point (transmission and reception point, TRP), a base station, a remote radio unit (remote radio unit, RRU) or a baseband unit (baseband unit, BBU) (which may also be referred to as a distributed unit (distributed unit, DU)) of a split base station, a broadband network service gateway (broadband network gateway, BNG), an aggregation switch, a non-3GPP access device, a relay station, an access point, or the like. The network device may be a macro base station, a micro base station or an indoor base station, a relay node or a donor node, or a radio controller in a CRAN scenario. Optionally, the RAN device may alternatively be a server, a wearable device, a vehicle, a vehicle-mounted device, or the like. For example, the RAN device in a V2X system may be a roadside unit (roadside unit, RSU). In addition, the RAN device in this embodiment of this application may be an eNB or an eNodeB (evolved NodeB) in LTE, a radio controller in a CRAN scenario, a base station (for example, a next generation NodeB (gNodeB, gNB)) in a 5G communication system, a base station in a future evolved system (for example, a 6G communication system), or the like. This is not specifically limited herein.

Further, in a possible implementation, in some deployments, the gNB may include a central unit (central unit, CU), a DU, a CU-control plane (control plane, CP), a CU-user plane (user plane, UP), or a radio unit (radio unit, RU). The gNB may further include an active antenna unit (active antenna unit, AAU). The CU implements a part of functions of the gNB, and the DU implements a part of functions of the gNB. For example, the CU is responsible for processing a non-real-time protocol and a service, and implements functions of a radio resource control (radio resource control, RRC) signaling layer and/or a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in a RAN, or the CU may be classified as a network device in the CN. This is not limited in embodiments of this application.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as an example for description in this embodiment of this application. Any one of the CU (or the CU-CP and the CU-UP), the DU, and the RU in this embodiment of this application may be implemented by using a software module, a hardware module, or a combination of a software module and a hardware module.

It should be understood that the CN is mainly responsible for maintaining subscription data of a mobile network, and provides session management, mobility management, policy management, security authentication, and other functions for the terminal device. The CN may include an NF network element in the foregoing "decentralized 3GPP network". The NF network element in the CN may be deployed on one or more CN devices, and the CN device may be deployed on a network side or a cloud side. This is not specifically limited in embodiments of this application.

Further, the NF network element shown in FIG. 1 may include an AMF network element, an AUSF network element, an SMF network element, a UPF network element, a UDM network element, an NEF network element, an NRF network element, an NSSF network element, a PCF network element, an AF network element, and other control plane functions. The foregoing network elements may interact with each other via service-based interfaces. For example, a service-based interface exhibited by the AUSF network element is Nausf; a service-based interface exhibited by the AMF network element is Namf; a service-based interface exhibited by the SMF network element is Nsmf; a service-based interface exhibited by the NSSF network element is Nnssf; a service-based interface exhibited by the NEF network element is Nnef; a service-based interface exhibited by the NRF network element is Nnrf; a service-based interface exhibited by the PCF network element is Npcf; a service-based interface exhibited by the UDM network element is Nudm; and a service-based interface exhibited by the AF network element is Naf.

The AMF network element is mainly responsible for mobility management and access management. The AMF network element may receive, through an N1 interface, a non-access stratum (non-access stratum, NAS) message (including mobility management (mobility management, MM) signaling and session management (session management, SM) signaling) from the terminal device and related signaling (for example, N2 signaling at a base station granularity that is exchanged with the AMF) from the RAN device, to complete a user registration procedure, SM signaling forwarding, and mobility management.

The AUSF network element may be configured to support authentication of 3GPP access and non-3GPP access (for example, wireless local area network (wireless local area network, WLAN) access or satellite access). The AUSF network element may be configured to perform an authentication service and generate a key, to implement bidirectional authentication on the terminal device. For example, in a master authentication and key agreement process between the AMF network element and the terminal device, the AUSF network element may complete authentication on the terminal device.

The SMF network element is mainly for session management in the mobile network, for example, is responsible for user plane network element selection, user plane network element redirection, internet protocol (internet protocol, IP) address allocation, bearer establishment, modification, and release, and quality of service (quality of service, QoS) control.

The UPF network element is configured to route and forward a packet, perform QoS processing on user plane data, and the like.

The UDM network element is configured to process a user identifier, access authentication, registration of a serving network element, mobility management, or the like.

The NEF network element mainly provides a service, so that the 3GPP network can securely provide a network service capability for a third-party service provider application function network element.

The NRF network element may provide a registration function, for example, support a service discovery function, that is, receive an NF discovery request from an NF network element, and provide information about a discovered NF for the NF network element.

The NSSF network element is configured to select a network slice and the like for the terminal device.

The PCF network element includes a user subscription data management function, a policy control function, a charging policy control function, QoS control, and the like, is a unified policy framework for guiding a network behavior, and provides policy rule information and the like for a control plane function network element (for example, the AMF network element).

The AF network element is mainly configured to provide application layer information for the 3GPP network. For example, the AF network element may include a service capability server (service capability server, SCS) or an application server (application server, AS).

It should be understood that FIG. 1 merely provides some examples of network elements or entities in the 5G network. The 5G network may further include some network elements or entities that are not shown in FIG. 1, such as a network data analytics function (network data analytics function, NWDAF). This is not limited in embodiments of this application.

It should be further understood that a network evolved after 5G (for example, a 6G network) may further include another network function, for example, a function related to artificial intelligence (artificial intelligence, AI), computing, or perception. In addition, names of the foregoing network elements may be different in the network evolved after 5G. This is not limited in this application.

Further, as shown in FIG. 1, the terminal device accesses the CN via the RAN device, and the terminal device may communicate with the AMF network element through the N1 interface (N1 for short). The RAN device communicates with the AMF network element through an N2 interface (N2 for short). The RAN device communicates with the UPF network element through an N3 interface (N3 for short). The SMF network element communicates with the UPF network element through an N4 interface (N4 for short). Different UPF network elements communicate with each other through an N9 interface (N9 for short). The UPF network element accesses a data network (data network, DN) through an N6 interface (N6 for short).

It should be understood that according to the foregoing descriptions of the AUSF network element, access of the terminal device to the CN may include 3GPP access and non-3GPP access. When accessing the CN by using a 3GPP access technology, the terminal device accesses the CN via the RAN device. When accessing the CN by using a non-3GPP access technology, the terminal accesses the CN via a non-3GPP access gateway (non-3GPP gateway, N3G-GW).

It may be understood that in embodiments of this application, a terminal device that accesses the CN via a RAN device may be referred to as a 3GPP terminal device, and a terminal device that accesses the CN via an N3G-GW may be referred to as a non-3GPP terminal device. This is uniformly described herein, and details are not described below again.

Further, there may be a plurality of terminal devices in FIG. 1. The plurality of terminal devices may form a personal internet of things network (personal IoT network, PIN). The PIN is a multi-node organization manner, and generally includes a member node, a management node, and a gateway node. Further, one member node may serve as the management node and the gateway node. Member nodes may communicate with each other by using the non-3GPP access technology, and the member node may communicate with the CN via the gateway node. The gateway node may have a 3GPP access capability. For example, the member node may be the foregoing non-3GPP terminal device, and the gateway node may be the foregoing N3G-GW.

Alternatively, to improve communication efficiency between terminal devices that are close to each other, the plurality of terminal devices may exchange data in a short-distance direct communication manner, for example, exchange data in a proximity-based services (Proximity-based services, ProSe) mode. The ProSe mode may mean that the terminal devices directly perform data exchange with each other, or perform data exchange with each other via the foregoing N3G-GW.

The following describes an architecture of a decentralized 3GPP network based on the communication architecture of the 3GPP network and an SC deployment manner.

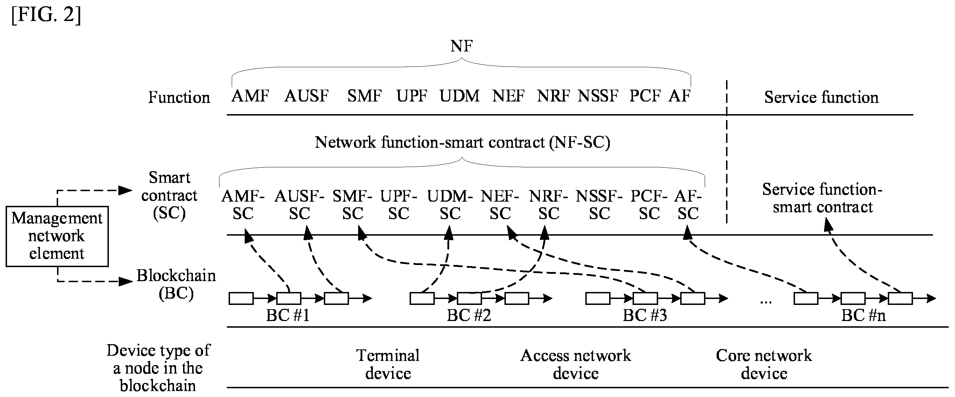

FIG. 2 is a diagram of an architecture of a decentralized 3GPP network according to an embodiment of this application. As shown in FIG. 2, the architecture of the 3GPP network may include a management network element and at least one BC managed by the management network element. The management network element has a management function, where the management function is used to manage the at least one BC, for example, deployment of an SC and control over a new node pending to join a BC. The at least one BC is a BC in the 3GPP network, that is, a device type of a node in each BC in the at least one BC may include the foregoing terminal device, RAN device, or CN device.

It may be understood that the node in the BC may further include an independent node (independent node, INN). The INN may be a node that has a BC capability but does not participate in a wireless communication service of the terminal device and/or the RAN device, for example, an edge computing (edge computing, EC) node.

Further, the foregoing RAN and CN may be infrastructure in the 3GPP network (that is, an operator network), and may jointly provide a 3GPP function, for example, the foregoing NF, the service function, or the network access and data transmission function provided by the RAN. In other words, an SC deployed by a BC node may be used to implement a communication network function, for example, a network function-smart contract, a service function-smart contract, and a data transmission-smart contract. For example, as shown in FIG. 2, the NF may be implemented by using the network function-smart contract (NF-SC), and the service function may be implemented by using the service function-smart contract. The NF-SC and the service function-smart contract may be deployed on each BC in the at least one BC.

For example, as shown in FIG. 2, the at least one BC may include BC #1 to BC #n, and SCs deployed on BC #1 to BC #n are different. Two NF-SCs, that is, an AMF-SC and an AUSF-SC, may be deployed on BC #1. A UDM-SC and an NRF-SC may be deployed on BC #2. An SMF-SC and an NEF-SC may be deployed on BC #3. An AF-SC and a service function-smart contract may be deployed on BC #n. Certainly, nodes in BC #1 to BC #n are not completely the same. For example, a node in the 3GPP network may be a member in both BC #1 and BC #3. In other words, in this embodiment of this application, the node in the 3GPP network may join a plurality of BCs.

In a possible implementation, the management network element may be a CN network element. The management network element may be a management plane network element, or the management network element may be a control plane network element. It may be understood that the management network element may be a new network element in the CN, for example, a ledger anchor function (ledger anchor function, LAF) network element.

It should be understood that the manner of deploying an SC on a BC shown in FIG. 2 is merely an example. For example, as the network evolves, SCs deployed on different BCs may be at least partially the same. This is not specifically limited in embodiments of this application.

Optionally, the management network element may be an independently deployed CN network element. Alternatively, the management network element may be deployed in an overlaid manner with the foregoing CN network element. For example, the management function of the management network element may be deployed in an overlaid manner with the foregoing AMF network element. It may be understood that the management network element may alternatively be deployed on a RAN side. For example, the management network element may be deployed in a DU, a CU, an O-DU, an O-CU, an O-RU, an O-RAN intelligent controller (RAN intelligent controller), or the like. This is not specifically limited in embodiments of this application.

Optionally, the management network element may be independent of the BC. For example, the management network element may be a network element that does not join any BC in the 3GPP network. In other words, the management network element may not be a node in the BC, that is, may provide the management function in a non-decentralized manner.

Alternatively, optionally, the management network element may be a node in the BC, and a function corresponding to an SC deployed on the BC includes the management function of the management network element. In other words, the management function of the management network element may be implemented by using the SC, and the management function is further provided in a decentralized manner.

It should be further understood that in this embodiment of this application, the 3GPP network may include one or more operator networks, and the management network element may manage BCs in the one or more operator networks. In other words, the management network element may manage the BCs across the operator networks.

It may be further understood that in this embodiment of this application, the management network element is merely an example for description, and may alternatively be described as a BC management network element, a BC control network element, a BC management and control network element, an SC management network element, an SC control network element, an SC management and control network element, a BC management controller, or the like.

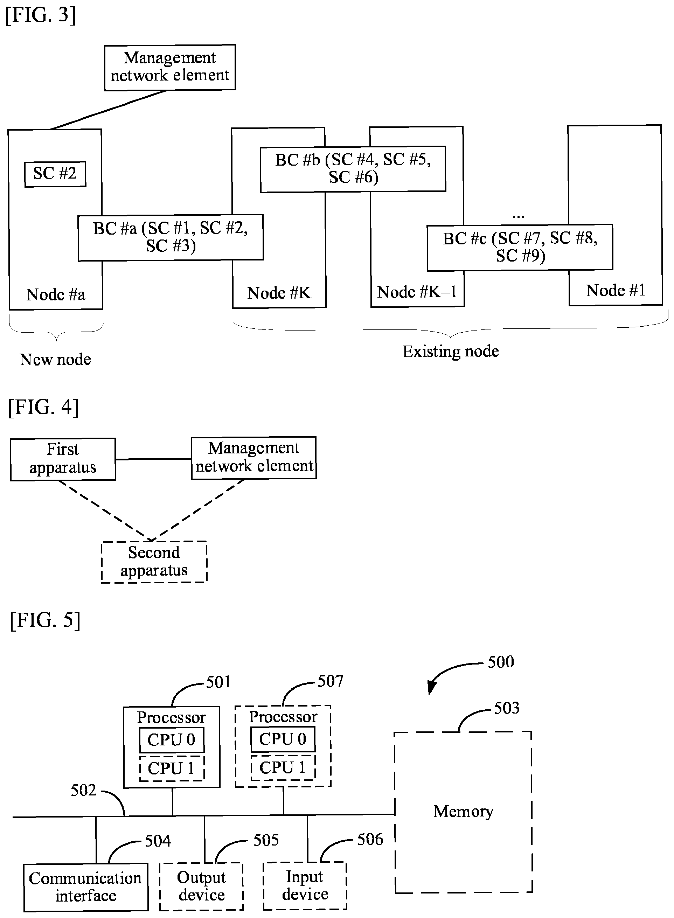

FIG. 3 is a diagram in which a new node joins a BC in the decentralized 3GPP network according to an embodiment of this application. As shown in FIG. 3, the BC managed by the BC management network element is BC #a, BC #b, and BC #c, and existing nodes in the BCs include node #1 to node #K. Node #K is located in BC #a and BC #b, node #K-1 is located in BC #b and BC #c, and node #1 is located in BC #c. SCs deployed on BC #a and BC #b are different. SCs deployed on BC #a include SC #1 to SC #3. SCs deployed on BC #b include SC #4 to BC #6. SCs deployed on BC #c include SC #7 to SC #9.

Node #a is a new node. Node #a may join BC #a under control and management of the management network element, and deploy SC #2 on BC #a.

It should be understood that a new node pending to join a BC is a new node for the BC. To be specific, the new node may be a new node that accesses the communication network, may be a node that has joined the communication network but has not joined a BC, may be a node pending to join a BC after detaching from the BC, or may be a node that has not detached from a current BC and intends to join a new BC. It may be understood that the node in the communication network has characteristics of high heterogeneous complexity and high dynamicity. Therefore, for the node pending to join a BC after detaching from the BC or a node pending to join a new BC, a status of the node may change, that is, a deployment requirement of an SC in the communication network may not be met. Therefore, the new node needs to be controlled and managed to join the BC, and the SC deployed on the BC needs to be controlled and managed.

In this embodiment of this application, a new node may first access the communication network, so that the new node may obtain related information of the management network element (for example, an address of the management network element or an identifier of the management network element), or the management network element may be aware of the new node via another network element (for example, the UDM network element). In this way, the new node may exchange information with the management network element.

For example, for the decentralized 3GPP network shown in FIG. 2, a plurality of BCs have been constructed in the 3GPP network. If a new node is a terminal device, the new node may first access the RAN, and then access the 3GPP network by using BC #1 on which the AMF-SC is deployed.

It may be understood that if there is no BC on which the AMF-SC is deployed in the 3GPP network, the AMF network element in the 3GPP network may be used to access the 3GPP network. Similarly, when accessing the 3GPP network, the RAN device and the core network device may access the 3GPP network by using a BC on which a corresponding NF-SC is deployed, or may access the 3GPP network via a corresponding network element in the 3GPP network.

FIG. 4 is a diagram of an architecture of a communication system to which a communication method provided in embodiments of this application is applicable. The communication system may include a first apparatus and a management network element. The first apparatus may be the foregoing new node pending to join a BC. The management network element may manage and control a BC that the first apparatus joins and an SC deployed by the first apparatus. Further, the first apparatus may be a logical entity, or may be a physical entity. For example, the first apparatus may be a terminal device or a chip of a terminal device. For another example, the first apparatus may be a RAN device or a chip of a RAN device. For another example, the first apparatus may be a CN device or a chip of a CN device. This is not specifically limited in embodiments of this application.

In a possible implementation, the first apparatus sends first request information to the management network element, where the first request information includes a function corresponding to an SC that the first apparatus expects to deploy. The first apparatus receives first feedback information from the management network element, where the first feedback information includes address information of a second apparatus, and an SC deployed by the second apparatus includes a first SC in the SC that the first apparatus expects to deploy. The first apparatus obtains data of the first SC based on the address information of the second apparatus.

In this embodiment of this application, the first apparatus may send, to the management network element, the function corresponding to the SC that the first apparatus expects to deploy, and then receive the address information of the second apparatus from the management network element, so that the first apparatus may join, based on the address information of the second apparatus, a BC that the second apparatus joins, to obtain the data of the first SC in the SC that the first apparatus expects to deploy, to deploy the first SC. In other words, for the first apparatus pending to join a BC in a decentralized communication network, the first apparatus is unaware of information about a node of a BC in the communication network and an SC deployed on the BC, and may obtain the address information of the second apparatus via the management network element, to determine a BC that the first apparatus can join and an SC that the first apparatus can deploy, that is, a BC that the first apparatus joins and an SC deployed by the first apparatus are managed and controlled by the management network element. Therefore, according to the communication method provided in embodiments of this application, a new node pending to join a BC can be managed and controlled in the decentralized communication network, to implement optimization of a communication network service.

A specific implementation of the foregoing solution is described in detail in the following embodiments. Details are not described herein.

It may be understood that the apparatus or the network element included in the communication system shown in FIG. 4 is merely an example for description, and constitutes no limitation on embodiments of this application. Actually, in the communication system shown in FIG. 4, there may be one or more first apparatuses, and there may be one or more management network elements. Further, the communication system in FIG. 4 may further include another apparatus or network element that has an interaction relationship with the apparatus or network element shown in the figure, for example, the second apparatus. This is not specifically limited herein.

In a possible implementation, the first apparatus, the management network element, and the second apparatus in this embodiment of this application may also be referred to as communication apparatuses, and may be a general-purpose device or a dedicated device. This is not specifically limited in embodiments of this application.

In a possible implementation, related functions of the first apparatus, the management network element, and the second apparatus in this embodiment of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function run on dedicated hardware, a combination of hardware and software, or a virtualization function instantiated on a platform (for example, a cloud platform).

For example, the related function of the first apparatus, the management network element, or the second apparatus in this embodiment of this application may be implemented by a communication apparatus 500 in FIG. 5. FIG. 5 is a diagram of a structure of the communication apparatus 500 according to an embodiment of this application. The communication apparatus 500 includes one or more processors 501, a communication line 502, and at least one communication interface (FIG. 5 is described merely by using an example in which a communication interface 504 and one processor 501 are included). The communication apparatus 500 may further include a memory 503.

The processor 501 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 502 may include a path, and is configured to connect different components.

The communication interface 504 may be a transceiver module, configured to communicate with another device or a communication network, for example, Ethernet, a RAN, or a WLAN. For example, the transceiver module may be an apparatus such as a transceiver or a transceiver machine. In a possible implementation, the communication interface 504 may alternatively be a transceiver circuit in the processor 501, and is configured to implement signal input and signal output of the processor.

The memory 503 may be an apparatus with a storage function, for example, may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another optical disk storage, optical disc storage (including a compressed optical disc, a laser disc, an optical disc, a digital versatile optical disc, a Blu-ray disc, and the like), a magnetic disk storage medium or another magnetic storage device, or any other medium capable of carrying or storing desired program code in a form of an instruction or a data structure and accessible by a computer. The memory may exist independently, and is connected to the processor through the communication line 502. Alternatively, the memory may be integrated with the processor.

The memory 503 is configured to store computer-executable instructions for executing the solutions of this application, and the processor 501 controls the execution. The processor 501 is configured to execute the computer-executable instructions stored in the memory 503, to implement the communication method provided in embodiments of this application.

Alternatively, in this embodiment of this application, the processor 501 may perform a processing-related function in the communication method provided in the following embodiments of this application, and the communication interface 504 is responsible for communication with the another device or the communication network. This is not specifically limited in embodiments of this application.

In a possible implementation, the memory 503 in this embodiment of this application may be further configured to store information or parameters described in the following embodiments, for example, the first request information, the first feedback information, and the data of the first SC.

The computer-executable instructions in embodiments of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 507 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 500 may further include an output device 505 and an input device 506. The output device 505 communicates with the processor 501, and may display information in a plurality of manners.

The communication apparatus 500 may be a general-purpose apparatus or a dedicated apparatus. For example, the communication apparatus 500 may be any one of the foregoing possible terminal devices or network devices, or an apparatus in a terminal device or a network device.

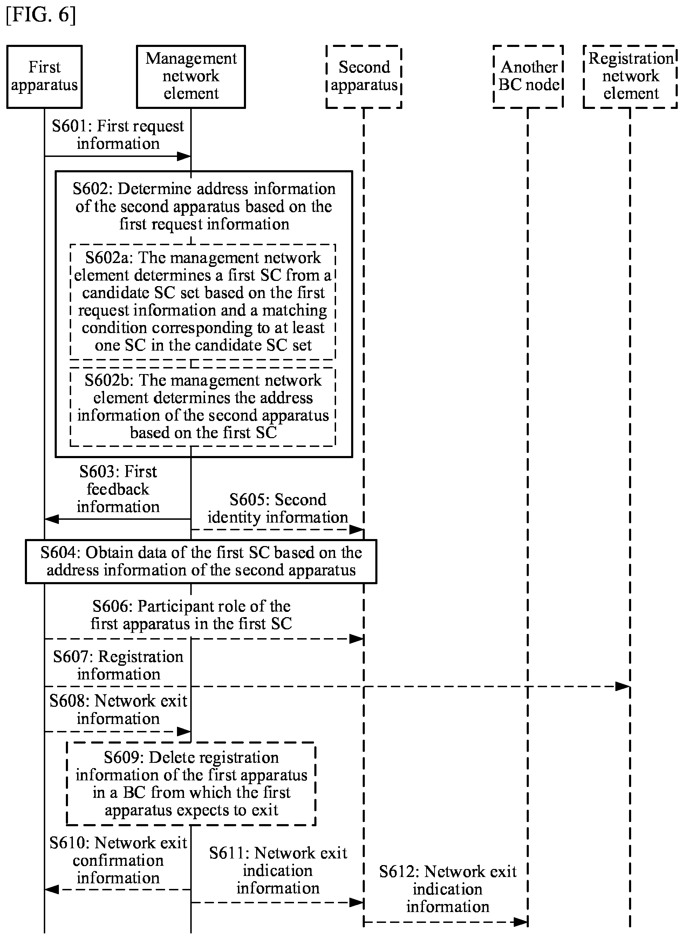

The following describes the communication method provided in embodiments of this application in detail with reference to FIG. 6.

It should be understood that in the following embodiments of this application, a name of information between devices or a name or the like of each parameter in the information is merely an example, and may alternatively be another name during specific implementation. This is not specifically limited in embodiments of this application.

Interaction between a first apparatus and a management network element shown in FIG. 6 is used as an example. FIG. 6 shows a communication method according to an embodiment of this application. The method includes the following steps.

S601: The first apparatus sends first request information to the management network element. Correspondingly, the management network element receives the first request information from the first apparatus. The first request information includes a function corresponding to an SC that the first apparatus expects to deploy.

S602: The management network element determines address information of a second apparatus based on the first request information, where an SC deployed by the second apparatus includes a first SC in the SC that the first apparatus expects to deploy, and the first SC is deployed on a first BC.

S603: The management network element sends first feedback information to the first apparatus. Correspondingly, the first apparatus receives the first feedback information from the management network element. The first feedback information includes the address information of the second apparatus.

S604: The first apparatus obtains data of the first SC based on the address information of the second apparatus.

The following separately describes the foregoing steps S601 to S604 in detail.

### For step S601

It should be understood that for the related descriptions of FIG. 4, the first apparatus may be a new node pending to join a BC in a decentralized 3GPP network. The first apparatus may refer to a device in the 3GPP network. For example, related descriptions of the first apparatus are provided in FIG. 4, and details are not described herein again.

Further, according to the related descriptions of FIG. 3, the new node may be a new node that accesses the 3GPP network, may be a node that has joined the 3GPP network but has not joined a BC, may be a node pending to join a BC after detaching from the BC, or may be a node that has not detached from a current BC and intends to join a new BC. In other words, an existing node in the 3GPP network needs to be managed and controlled by the management network element to join a BC and deploy an SC on the BC.

It should be understood that pending to join a BC may mean that the new node expects to join a BC. Alternatively, pending to join a BC may mean that the new node may join a BC in response to a request of the management network element or another network element or apparatus.

It may be understood that address information or an identifier of the management network element may be configured or preconfigured. For example, when the first apparatus accesses the 3GPP network, the address information or the identifier of the management network element may be configured for the first apparatus, so that the first apparatus may establish a communication connection to the management network element by using the address information or the identifier of the management network element, and the first apparatus may send the first request information to the management network element.

In a possible implementation, the address information of the management network element may be an internet protocol (internet protocol, IP) address, and the identifier of the management network element may include a fully qualified domain name (fully qualified domain name, FQDN) and/or a uniform resource identifier (uniform resource identifier, URI).

It should be understood that for the management network element in step S601, refer to the related descriptions of the management network element in FIG. 2. Details are not described herein again.

It may be understood that the first apparatus is unaware of information about a node of a BC in the 3GPP network and information about an SC deployed on the BC. To be specific, for the first apparatus, address information of the node of the BC in the 3GPP network and specific content and a deployment status of the SC are unknown, and the corresponding management network element cannot predict the SC that the first apparatus expects to deploy. The first apparatus notifies, by using the first request information, the management network element of the function corresponding to the SC that the first apparatus expects to deploy. In this way, the management network element can determine, based on a first request message, the SC that the first apparatus expects to deploy and a BC that the first apparatus can join. This can prevent the first apparatus from joining a BC that the first apparatus does not expect to join, and prevent the first apparatus from deploying an SC that the first apparatus does not expect to deploy. The following specifically describes content of the first request information.

It should be understood that the function that is in the first request information and that corresponds to the SC that the first apparatus expects to deploy may be the NF and the service function in the foregoing "decentralized 3GPP network". Specifically, the first request information may include an identifier or an index of the foregoing function.

In a possible implementation, the function corresponding to the SC that the first apparatus expects to deploy may include a plurality of functions. Each of the plurality of functions may correspond to one SC. In other words, the SC that the first apparatus expects to deploy may be a plurality of SCs.

In a possible implementation, the plurality of SCs that the first apparatus expects to deploy may belong to a same BC, that is, the first BC. In other words, the first apparatus may deploy, by joining one BC, the plurality of SCs that the first apparatus expects to deploy.

Alternatively, in another possible implementation, the plurality of SCs that the first apparatus expects to deploy may not belong to a same BC. In other words, there are a plurality of first BCs, and the first apparatus may join the plurality of first BCs and deploy the plurality of SCs that belong to different first BCs.

It may be understood that the function corresponding to the SC that the first apparatus expects to deploy may alternatively be described as a type of the SC that the first apparatus expects to deploy. The type of the SC may be a type of the function implemented by the SC. For example, the type of the SC may be classified into an AMF type, an AUSF type, a UDM type, or an AF type.

It should be understood that as described in the foregoing "solution for a node joining a BC in a consortium chain", a node in the network has a characteristic of high dynamicity. The management network element may obtain related information of the first apparatus to determine whether the function corresponding to the SC that the first apparatus expects to deploy matches the first apparatus, to ensure quality of a decentralized 3GPP network service. For example, considering mobility of a terminal device, the terminal device may continuously perform handover between cells. Therefore, when the first apparatus is a terminal device, the first apparatus is not suitable for deploying an AMF-SC. For another example, if the first apparatus estimates that online duration is only dozens of minutes, the quality of the decentralized 3GPP network service cannot be ensured, and the first apparatus is not suitable for deploying an SC. For another example, if the first apparatus runs at a low speed, the first apparatus is not suitable for deploying an NF-SC that requires a high computing capability, such as a UPF or UDM.

In a possible implementation, the first request information further includes at least one of the following: type information of the first apparatus, operating of the first apparatus, or capability information of the first apparatus. In other words, the first request information may enable the management network element to match, for the first apparatus from the SC that the first apparatus expects to deploy, an SC that is suitable for the first apparatus to deploy, reducing impact on the quality of the decentralized 3GPP network service.

In a possible implementation, the management network element may alternatively obtain the type information, the operating, the capability information, or the like of the first apparatus via another network element. For example, the management network element may obtain AMF registration information of the first apparatus via a UDM network element, to obtain the type information of the first apparatus.

In a possible implementation, the type information of the first apparatus specifically includes a device type of the first apparatus and/or a participant role type of the first apparatus in the SC that the first apparatus expects to deploy. The device type of the first apparatus may include a terminal device, a RAN device, a CN device, or the like. It may be understood that the management network element may determine, based on the device type of the first apparatus, whether the function corresponding to the SC that the first apparatus expects to deploy matches the first apparatus. For example, the first apparatus is a terminal device, and the function corresponding to the SC that the first apparatus expects to deploy includes an AMF and an AF. Due to mobility of the terminal device, the 3GPP network may not expect the terminal device to deploy an AMF-SC, so that the management network element may determine that the first apparatus can deploy an AF-SC.

In a possible implementation, the participant role type in the SC may include at least one of the following: a verification role, a transaction role, a backup role, or a network access provision role. The transaction role is used to generate a transaction request. The verification role is used to verify the transaction request. The backup role may be a role that does not participate in a transaction or verification and only backs up the BC data. The network access role mainly provides a network access service for a user.

For example, the SC is an AMF-SC. In a process of establishing an initial NAS security context between the terminal device and the AMF, the AMF should select a NAS encryption algorithm and a NAS integrity protection algorithm. Therefore, in a BC on which the AMF-SC is deployed, a NAS encryption algorithm and a NAS integrity protection algorithm may be selected for a transaction role in the BC, and the selected NAS encryption algorithm and NAS integrity protection algorithm are translated into a transaction request based on a BC protocol corresponding to the first BC. Then, a signature is added to the transaction request, and the transaction request is sent to a BC node in the first BC. Further, after receiving the transaction request, a verification role performs consensus verification. To be specific, each of a plurality of verification roles returns a voting result to the transaction role, to complete transaction consensus. In this way, the transaction role may write data of a transaction consensus result to the blockchain. Then, each node in the BC backs up the data and updates an SC status, to complete the transaction request. If the transaction consensus result is that the NAS encryption algorithm and the NAS integrity protection algorithm in the transaction request are agreed to be selected, a network access role in the BC may send the NAS encryption algorithm and the NAS integrity protection algorithm to the terminal device.

In a possible implementation, the SC that the first apparatus expects to deploy is the plurality of SCs, and the participant role type of the first apparatus in the SC that the first apparatus expects to deploy may include a participant role type corresponding to the first apparatus in each of the plurality of SCs. For example, the SC that the first apparatus expects to deploy is SC #1, SC #2, and SC #3, and the participant role type of the first apparatus in the SC that the first apparatus expects to deploy may include a participant role type in SC #1, a participant role type in SC #2, and a participant role type in SC #3.

In a possible implementation, the operating of the first apparatus specifically includes online duration estimated by the first apparatus and/or an online time period estimated by the first apparatus. The online duration may be shortest network duration that the first apparatus estimates the first apparatus can contribute in the BC, for example, 0.5 hours, 1 hour, or 1.5 hours. The online time period estimated by the first apparatus may be a time period during which the first apparatus estimates the first apparatus may be online in the BC, for example, 10:00 to 12:00.

It may be understood that as described above, to ensure the quality of the decentralized network service, network duration that a node in the network contributes in a BC should be greater than or equal to a first time threshold. The first time threshold may be 1 hour, 2 hours, 3 hours, or a longer time.

It may be further understood that to further ensure the quality of the decentralized network service, it should be ensured that at least a part of nodes in the network are online in a network load peak time period, to provide the network service. For example, the network load peak time period may be 20:00 to 22:00. If the online time period estimated by the first apparatus is 18:00 to 20:00, the first apparatus is not suitable for deploying an SC.

In a possible implementation, the capability information of the first apparatus specifically includes at least one of the following: a computing capability of the first apparatus, a storage capability of the first apparatus, or a network connection capability of the first apparatus. The computing capability of the first apparatus may be a computing speed (for example, a CPU frequency), a calculation capability, or the like of the first apparatus. The storage capability of the first apparatus may be a memory size, a local memory size, a read/write rate (or referred to as a read/write bandwidth), or the like of the first apparatus. The network connection capability of the first apparatus may be a network connection type provided by the first apparatus, for example, a 3GPP access connection, a Wi-Fi connection, a Bluetooth connection, or a wired connection.

It may be understood that to improve security, validity of the first apparatus joining the BC may be verified.

In a possible implementation, the management network element may verify the validity of the first apparatus joining the BC. The management network element may determine, by authenticating an identity of the first apparatus, the validity of the first apparatus joining the BC.

For example, the first request information may further include an identity identifier (identifier, ID) of the first apparatus. In this way, by using the identity ID of the first apparatus, the management network element may verify the validity of the first apparatus joining the BC.

Table 1 provides an example of specific content that may be included in the first request information. The first request information may include a node ID, the device type, the estimated online duration, the CPU frequency, the memory size, a storage size, a network interface list, a requested SC list, and a participant role type list of the first apparatus. It may be understood that for functions of the parameters, refer to the foregoing descriptions of the type information, the operating, or the capability information of the first apparatus. Details are not described herein again.

**Table 1**

| Parameter name | Parameter value | Parameter meaning |
|---|---|---|
| Node ID | ID1 | Identity ID of the first apparatus |
| Device type | Terminal device | Identifying what type of device the first apparatus is |
| Estimated online duration | 3 hours | Estimated available time |
| CPU frequency | 1.7 GHz | Computing speed |
| Memory size | 1 GB | Memory size |
| Storage size | 500 GB | Local memory size |
| Network interface list | [3GPP, Wi-Fi, Bluetooth] | Available network connection type |
| Requested SC list | [SC #1, SC #2, SC #3] | Function corresponding to the SC expected to be deployed |
| Participant role type list | [SC #1 - verification role, SC #2 - verification role, SC #3 - backup role] | Role type in the SC expected to be deployed |

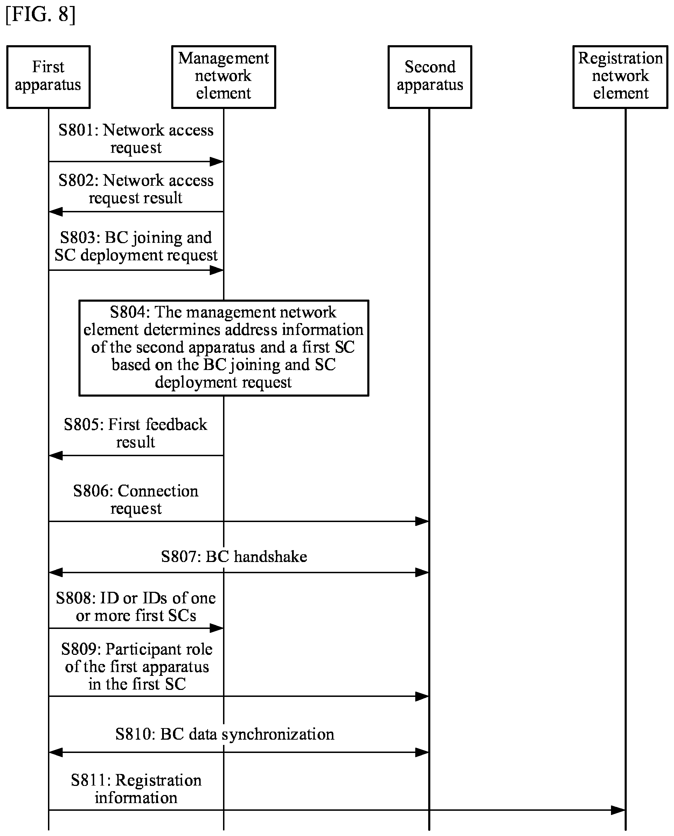

In a possible implementation, for verification of the validity of the first apparatus joining the BC, the management network element may further request another network element (for example, a trust anchor (trust anchor, TA)) or communication entity to verify the validity of the first apparatus joining the BC. Alternatively, the management network element may further obtain a result of verifying, by another network apparatus or communication entity, the validity of the first apparatus joining the BC. The another communication entity may be a server that records identity information of the first apparatus. In a possible implementation, the validity of the first apparatus joining the BC may be verified before step S601. For details of a verification process between the management network element and the first apparatus, refer to the following method procedures shown in FIG. 8 to FIG. 10.

### For step S602

The management network element determines, based on the received first request information, the first SC suitable for the first apparatus to deploy, and may determine the address information of the second apparatus based on the first SC. The address information of the second apparatus may be an IP address, an FQDN, or a URI. This is not specifically limited in embodiments of this application. It may be understood that the address information of the second apparatus may be used by the first apparatus to join a BC corresponding to the first SC, and the second apparatus may also be referred to as an entry node (entry node).

Further, by using the first request information, the management network element may feed back the address information of the second apparatus, so that the first apparatus obtains address information of a BC node, to join the BC and deploy the SC that the first apparatus expects to deploy.

In a possible implementation, the management network element selects the first SC based on information about at least one BC and the function that is in the first request information and that corresponds to the SC expected to be deployed.

In still another possible implementation, the management network element selects the first SC based on information about at least one BC, the function corresponding to the SC expected to be deployed, the type information, the operating, and the capability information. Specifically, the management network element may first select a subsequent SC based on the function corresponding to the SC expected to be deployed, and then select, from the candidate SC, an SC that matches the type information, the operating, or the capability information of the first apparatus as the first SC.

In a possible implementation, that the management network element obtains the information about the at least one BC in the 3GPP network may include: The management network element receives registration information from a node in each BC in the at least one BC in the 3GPP network. The registration information may include information about the node in the BC and information about an SC deployed on the BC. In other words, the management network element may store the information about the at least one BC in the 3GPP network, and may determine, from the at least one BC based on the SC that the first apparatus expects to deploy, address information of a node in the BC on which the SC that the first apparatus expects to deploy is deployed.

In a possible implementation, the information about the at least one BC may include one or more of the following: the information about the node in each BC in the at least one BC, the information about the SC deployed on each BC in the at least one BC, or a BC ID of each BC in the at least one BC. The information about the node in the BC may include at least one of the following: an ID of the node, a device type of the node, address information of the node, location information of the node, a PLMN ID of the node, a PLMN type of the node, or a participant role of the node in the SC. The PLMN ID of the node may identify an operator network to which the node belongs. For example, the node in the BC may include node #1 and node #2, and node #1 and node #2 may belong to a same operator network (that is, a PLMN), or node #1 and node #2 may belong to two different operator networks. The PLMN type of the node may be a PLMN type of a 3GPP terminal device. The PLMN type of the 3GPP terminal device may include a home PLMN and a visited PLMN. For example, if the 3GPP terminal device roams from a physical region corresponding to the home PLMN to another physical region, the 3GPP terminal device may access the 3GPP network via a RAN device in a visited PLMN corresponding to the another physical region. In other words, a location range in which the 3GPP terminal device is currently located may be determined by using the PLMN type of the 3GPP terminal device.

In a possible implementation, the information about the SC deployed on the BC may include at least one of the following: an ID of the SC, a function corresponding to the SC, and a matching condition corresponding to the SC. The ID of the SC may be an account address.

In a possible implementation, the matching condition corresponding to the SC may be used by the management network element to perform matching on the SC that the first apparatus expects to deploy, to select the SC suitable for the first apparatus to deploy. This can further ensure the quality of the decentralized 3GPP network service.

The following describes, with reference to the matching condition corresponding to the SC, a specific manner in which the management network element determines the address information of the second apparatus.

In a possible implementation, that the management network element determines the address information of the second apparatus based on the first request information includes the following steps.

S602a: The management network element determines the first SC from a candidate SC set based on the first request information and a matching condition corresponding to at least one SC in the candidate SC set.

It may be understood that a function corresponding to the SC in the candidate SC set is the same as the function corresponding to the SC that the first apparatus expects to deploy. A plurality of SCs deployed on the at least one BC include the SC in the candidate SC set. Alternatively, an SC managed by the management network element includes the SC in the candidate SC set. Alternatively, the SC in the candidate SC set may have been registered in the 3GPP network, and information about the BC on which the SC is deployed may be obtained by the management network element.

It may be further understood that each SC in the candidate SC set may have a matching condition, or a part of SCs in the candidate SC set may not have a matching condition. This is not specifically limited in embodiments of this application.

In a possible implementation, the candidate SC set is obtained from a registration network element. The registration network element is configured to store an SC deployed on each of a plurality of BCs managed by the management network element. In other words, the management network element may obtain the candidate SC set by querying the registration network element. It may be understood that the registration network element may be the foregoing UDM network element, an NRF network element, or another network element. This is not specifically limited in embodiments of this application.

In a possible implementation, the matching condition corresponding to the at least one SC in the candidate SC set is preconfigured.

Alternatively, in another possible implementation, the matching condition corresponding to the at least one SC in the candidate SC set is obtained from the registration network element. The registration network element is configured to store the SC deployed on each of the plurality of BCs managed by the management network element and a matching condition corresponding to the SC deployed on each of the plurality of BCs.

In a possible implementation, a function corresponding to the registration network element may also be implemented by using the SC, and the registration function is further provided in a decentralized manner. In other words, in this embodiment of this application, the candidate SC set and/or the matching condition corresponding to the at least one SC in the candidate SC set may be obtained from a BC node deploying a registration function-SC.

In a possible implementation, the matching condition may include at least one of the following: deployment-prohibited type information corresponding to the SC, deployment-prohibited operating corresponding to the SC, or deployment-prohibited capability information corresponding to the SC. It may be understood that the deployment-prohibited type information corresponding to the SC may alternatively be deployment-allowed type information corresponding to the SC. The deployment-prohibited operating corresponding to the SC may alternatively be deployment-allowed operating corresponding to the SC. The deployment-prohibited capability information corresponding to the SC may alternatively be deployment-allowed capability information corresponding to the SC, or the like.

In a possible implementation, the type information may include a device type and/or a participant role type in the SC. The operating may include online duration and/or an online time period. The capability information may include a computing capability, a storage capability, or a network connection capability. For the type information, the operating, and the capability information, refer to the related descriptions in step S601. Details are not described herein again.

The following uses an example to describe how to determine the first SC from the candidate SC set based on the matching condition corresponding to the at least one SC in the candidate SC set.

For example, a function corresponding to an SC in the candidate SC set is the AMF, and a matching condition corresponding to the SC may be that deployment-prohibited type information corresponding to the SC is a deployment-prohibited terminal device. If the device type of the first apparatus is a terminal device, the SC does not match the first apparatus; or if the device type of the first apparatus is a CN device, the SC may be the first SC.

For another example, a function corresponding to an SC in the candidate SC set is UDM, and a matching condition corresponding to the SC may be that a computing rate needs to be greater than 1.55 GHz and a storage size needs to be greater than or equal to 10 GB. If a computing rate of the first apparatus is 1.7 GHz, and the storage size of the first apparatus is 10 GB, the SC matches the first apparatus, and the SC may be the first SC.

For another example, a function corresponding to an SC in the candidate SC set is the AF, and a matching condition corresponding to the SC may be that the SC allows the participant role type to be the backup role. If the participant role type of the first apparatus in the SC expected to be deployed is the verification role, the SC does not match the first apparatus, and the SC is not the first SC.

Table 2 provides an example of specific content that may be included in the matching condition. The matching condition may include the ID of the SC, a name of the SC, deployment-prohibited device type, shortest online duration, the CPU frequency, the memory size, the storage size, an allowed network connection type, the address information of the second apparatus, and the participant role type. It may be understood that for functions of the parameters, refer to related descriptions of parameter meanings in Table 2. Details are not described herein again.

**Table 2**

| Parameter name | Parameter value | Parameter meaning |
|---|---|---|
| ID of the SC | SC-ID1 | Account address of the SC, which may be a unique identifier in the BC |
| Name of the SC | AMF | Function name corresponding to the SC |
| Deployment-prohibited device type | Terminal device | Deployment of this SC device type is not allowed. |
| Shortest online duration | 1 hour | Shortest network duration that a node can contribute |
| CPU frequency | 1.7 GHz | Minimum computing rate required by the SC |
| Memory size | 500 MB | Minimum memory size required by the SC |
| Storage size | 10 GB | Minimum local storage size required by the SC |
| Allowed network connection type | [3GPP, wired] | Access mode of a node allowed to deploy the SC |
| Address information of the second apparatus | 10.23.114.100 | Entry address of the BC where the SC is located |
| Participant role type | Verification role | Participant role type allowed by the SC, for example, whether the participant role type is allowed to be the verification role, or whether the participant role type is allowed to be the transaction role |

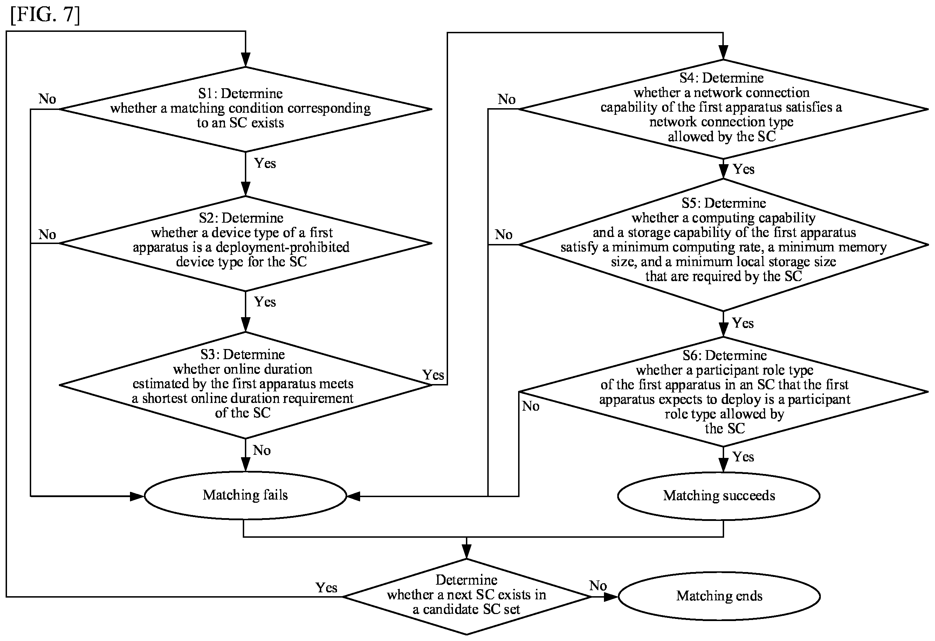

Further, based on the matching condition shown in Table 2, a matching procedure of the candidate SC set is described as an example with reference to FIG. 7.

As shown in FIG. 7, the matching procedure includes the following steps.

S1: Determine whether the matching condition corresponding to the SC exists. If the matching condition corresponding to the SC exists, step S2 is performed; or if the matching condition corresponding to the SC does not exist, matching fails. It is determined whether a next SC exists in the candidate SC set. If the next SC exists in the candidate SC set, step S1 is performed again; or if the next SC does not exist in the candidate SC set, matching ends.

S2: Determine whether the device type of the first apparatus is the deployment-prohibited device type for the SC. If the device type of the first apparatus is not the deployment-prohibited device type for the SC, step S3 is performed; or if the device type of the first apparatus is the deployment-prohibited device type for the SC, matching fails. It is determined whether a next SC exists in the candidate SC set. If the next SC exists in the candidate SC set, step S1 is performed again; or if the next SC does not exist in the candidate SC set, matching ends.

S3: Determine whether the online duration estimated by the first apparatus meets a shortest online duration requirement of the SC. If the online duration estimated by the first apparatus meets the shortest online duration requirement of the SC, step S4 is performed; or if the online duration estimated by the first apparatus does not meet the shortest online duration requirement of the SC, matching fails. It is determined whether a next SC exists in the candidate SC set. If the next SC exists in the candidate SC set, step S1 is performed again; or if the next SC does not exist in the candidate SC set, matching ends.

S4: Determine whether the network connection capability of the first apparatus satisfies the network connection type allowed by the SC. If the network connection capability of the first apparatus satisfies the network connection type allowed by the SC, step S5 is performed again; or if the network connection capability of the first apparatus does not satisfy the network connection type allowed by the SC, matching fails. It is determined whether a next SC exists in the candidate SC set. If the next SC exists in the candidate SC set, step S1 is performed again; or if the next SC does not exist in the candidate SC set, matching ends.

S5: Determine whether the computing capability and the storage capability of the first apparatus satisfy the minimum computing rate, the minimum memory size, and the minimum local storage size that are required by the SC. If the computing capability and the storage capability of the first apparatus satisfy the minimum computing rate, the minimum memory size, and the minimum local storage size that are required by the SC, step S6 is performed; or if the computing capability and the storage capability of the first apparatus do not satisfy the minimum computing rate, the minimum memory size, and the minimum local storage size that are required by the SC, matching fails. It is determined whether a next SC exists in the candidate SC set. If the next SC exists in the candidate SC set, step S1 is performed again; or if the next SC does not exist in the candidate SC set, matching ends.

S6: Determine whether the participant role type of the first apparatus in the SC that the first apparatus expects to deploy is the participant role type allowed by the SC. If the participant role type of the first apparatus in the SC that the first apparatus expects to deploy is the participant role type allowed by the SC, matching succeeds; or if the participant role type of the first apparatus in the SC that the first apparatus expects to deploy is not the participant role type allowed by the SC, matching fails. After step S6, it is determined whether a next SC exists in the candidate SC set. If the next SC exists in the candidate SC set, step S1 is performed again; or if the next SC does not exist in the candidate SC set, matching ends.

It may be understood that after the foregoing steps S1 to S6, an SC matching result may be obtained through summarization, to determine the first SC.

It should be understood that the matching procedure shown in FIG. 7 is merely an example, and a sequence of S1 to S6 is not limited in this application. The management network element may perform processing of the steps serially, as shown in FIG. 7, or may perform processing of a plurality of steps in parallel. This is not specifically limited in embodiments of this application.

In a possible implementation, there are a plurality of first SCs. It may be understood that when the SC that the first apparatus expects to deploy is a plurality of SCs that the first apparatus expects to deploy, the first SC that satisfies the foregoing matching condition may be a plurality of different first SCs.

S602b: The management network element determines the address information of the second apparatus based on the first SC.

The management network element may determine the first BC based on the first SC, and then determine the second apparatus based on a node in the first BC, to determine the address information of the second apparatus.

The following describes, based on different quantities of first SCs, cases in which the management network element determines the second apparatus.

### Case 1

When there is one first SC, the management network element may determine one second apparatus.

In a possible implementation, the second apparatus may be any node in the first BC.

In another possible implementation, the second apparatus may be a node in the first BC that can establish a communication connection to the first apparatus. For example, if the device type of the first apparatus is a 3GPP terminal device, the second apparatus may be a RAN device or an AMF network element closest to the first apparatus in a physical and/or logical topology. For another example, if the device type of the first apparatus is a non-3GPP terminal device, the second apparatus may be an N3G-GW closest to the first apparatus in a physical and/or logical topology. For another example, the second apparatus may be a BC node that is located in a same operator network or PLMN as the first apparatus. For another example, if the device type of the first apparatus is a 3GPP terminal device, and the first apparatus accesses the 3GPP network via a RAN device in a visited PLMN, the second apparatus may be a BC node in the visited PLMN. In other words, the management network element may select, from the first BC, a node that can directly establish a communication connection to the first apparatus as the second apparatus. In this way, a communication delay can be reduced, and occupation of network resources can be reduced.

### Case 2

When the first SC is a plurality of first SCs, each of the plurality of first SCs is deployed on different BCs, and nodes in different BCs are different, each of the plurality of first SCs may correspond to one second apparatus, so that the management network element may determine address information of the second apparatus corresponding to each of the plurality of first SCs.

For example, as shown in FIG. 3, the plurality of first SCs are SC #2 and SC #7, where SC #2 is deployed on BC #a, and SC #7 is deployed on BC #c. Nodes in BC #a include node #a and node #K. Nodes in BC #c include node #K-1 to node #1. In other words, BC nodes in BC #a and BC #c are different, that is, a second apparatus corresponding to SC #2 is different from a second apparatus corresponding to SC #7.

It may be understood that for Case 2, the second apparatus may also be determined in the manner in Case 1.

### Case 3

When the first SC is a plurality of first SCs, and the plurality of first SCs are deployed on a same BC, the management network element may determine one second apparatus.

For example, as shown in FIG. 3, three different SCs may be deployed on BC #a, that is, SC #1, SC #2, and SC #3. In other words, the plurality of first SCs may be deployed on the same BC, so that the management network element may determine one second apparatus based on the plurality of first SCs. An SC deployed by the second apparatus includes the plurality of first SCs.

It may be understood that for Case 3, the second apparatus may also be determined in the manner in Case 1.

### Case 4

When the first SC is a plurality of first SCs, the plurality of first SCs are deployed on different BCs, but a same node exists in the different BCs, the management network element may determine one second apparatus, or may determine a plurality of different second apparatuses.

For example, as shown in FIG. 3, SC #3 is deployed on BC #a, and SC #4 is deployed on BC #b. However, a same BC node, that is, node #K, exists in BC #a and BC #b. In other words, when all of the plurality of first SCs are deployed by a same BC node, the management network element may determine node #K as the second apparatus.

For another example, as shown in FIG. 3, the management network element may select two second apparatuses, that is, node #a and node #K.

It may be understood that when a capability (for example, the computing capability and the storage capability) of the first apparatus is not strong, to ensure the quality of the decentralized 3GPP network service, the first apparatus is not expected to bear excessive network services. Therefore, when there are a plurality of first SCs, the management network element may alternatively select one of the plurality of first SCs, and determine the second apparatus based on the one first SC.

### For step S603

It may be understood that when the first feedback information includes the address information of the second apparatus, the first apparatus may determine that the management network element agrees that the first apparatus deploys the SC that the first apparatus expects to deploy. The first apparatus may expect to deploy one or more SCs.

In a possible implementation, the first feedback information may further include information indicating the first SC. The information indicating the first SC may be, for example, a function corresponding to the first SC, a function type corresponding to the first SC, or an ID of the first SC. This is not specifically limited in embodiments of this application.

It may be understood that when the first apparatus expects to deploy a plurality of SCs, the first apparatus may determine, by using the information indicating the first SC, SCs in the plurality of SCs that the management network element agrees to deploy.

In a possible implementation, there are a plurality of first SCs, and the information indicating the first SC may include information indicating each of the plurality of first SCs.

In a possible implementation, there are a plurality of first SCs, and the address information of the second apparatus may include address information of a second apparatus corresponding to each of the plurality of first SCs. It may be understood that for Case 2, the plurality of first SCs may be deployed on different BCs, and different BCs correspond to different second apparatuses. The first apparatus joins the BCs by using different second apparatuses, and obtains data of each of the plurality of first SCs.

### For step S604

In a possible implementation, that the first apparatus obtains the data of the first SC based on the address information of the second apparatus includes: The first apparatus establishes a communication connection to the second apparatus based on the address information of the second apparatus, requests to establish a BC connection to the second apparatus by deploying a BC protocol corresponding to the first BC, to join the first BC, and obtains the data of the first SC in a BC data synchronization manner, where the first BC is a BC on which the first SC is deployed, that is, a BC that the second apparatus joins. In other words, the first apparatus establishes the BC connection to the second apparatus, to obtain the data of the first SC. In this way, the first apparatus may deploy the first SC. Further, the first apparatus may establish the BC connection to the second apparatus by installing in advance the BC protocol corresponding to the first BC.

In a possible implementation, before establishing the BC connection to the second apparatus, the first apparatus may obtain the BC protocol corresponding to the first BC from the registration network element or the management network element. It may be understood that the first apparatus may alternatively obtain, via a node other than the registration network element and the management network element, for example, the second apparatus, the BC protocol corresponding to the first BC. In addition, in a process of establishing the communication connection between the first apparatus and the second apparatus, the first apparatus may request to deploy the first SC, that is, request to establish the BC connection and deploy the first SC at the same time; or the first apparatus may first request to establish the BC connection, and then request to deploy the first SC. The following separately provides descriptions.

In a possible implementation, that the first apparatus obtains the data of the first SC based on the address information of the second apparatus includes the following steps.

S604-1: The first apparatus sends second request information to the second apparatus based on the address information of the second apparatus. Correspondingly, the second apparatus receives the second request information from the first apparatus. The second request information is used to request to deploy the first SC.

It may be understood that when the BC connection is not established between the first apparatus and the second apparatus, that the second request information is used to request to deploy the first SC may include: The second request information is used to request to establish the BC connection to the second apparatus and deploy the first SC.

In a possible implementation, the second request information may include the information indicating the first SC. For details about the information indicating the first SC, refer to the related descriptions of step S603. Details are not described herein again.

S604-2: The second apparatus sends second feedback information to the first apparatus based on the second request information. Correspondingly, the first apparatus receives the second feedback information from the second apparatus. The second feedback information may include data of the BC protocol corresponding to the first BC.

In other words, the first apparatus may receive the data of the BC protocol corresponding to the first BC from the second apparatus by sending the second request information to the second apparatus, to obtain the BC protocol corresponding to the first BC, that is, the first apparatus may establish the BC connection to the second apparatus without installing in advance the BC protocol corresponding to the first BC. It may be understood that in comparison with the first apparatus obtaining the BC protocol from the registration network element or the management network element, the first apparatus obtaining, via the second apparatus, the BC protocol corresponding to the first BC may reuse interaction signaling required for establishing the BC connection between the first apparatus and the second apparatus, so that interaction with the registration network element or the management network element is not required. Therefore, signaling overheads can be reduced.

S604-3: The first apparatus and the second apparatus synchronize BC data based on the BC protocol corresponding to the first BC, where the BC data includes the data of the first SC.

It may be understood that the first apparatus and the second apparatus may perform a BC handshake based on the BC protocol corresponding to the first BC, to establish the BC connection between the first apparatus and the second apparatus, to complete preparations before BC data synchronization. The second request information is used to request to deploy the first SC, so that the second apparatus may determine BC data that needs to be synchronized. After synchronization of the BC data is completed between the first apparatus and the second apparatus, the first apparatus may complete deployment of the first SC.

It may be understood that the communication connection between the first apparatus and the second apparatus may be established by the 3GPP NF network element. For example, the communication connection may be a NAS connection, a protocol data unit (protocol data unit, PDU) session, or an IP connection.

It should be understood that in this embodiment of this application, the second request information in step S604-1 may alternatively be used to request to establish the BC connection instead of requesting to deploy the first SC, to obtain the data of the BC protocol data corresponding to the first BC.

In another possible implementation, that the first apparatus obtains the data of the first SC based on the address information of the second apparatus includes the following steps.

Step A: The first apparatus sends second request information to the second apparatus based on the address information of the second apparatus. Correspondingly, the second apparatus receives the second request information from the first apparatus. The second request information is used to request to establish the BC connection.

Step B: The second apparatus sends second feedback information to the first apparatus based on the second request information. Correspondingly, the first apparatus receives the second feedback information from the second apparatus. The second feedback information may include data of the BC protocol corresponding to the first BC.

Further, after the first apparatus obtains the data of the BC protocol corresponding to the first BC, the first apparatus may perform BC interaction, for example, perform the BC handshake, with the second apparatus.

Step C: The first apparatus and the second apparatus perform the BC handshake based on the BC protocol corresponding to the first BC.

It may be understood that performing the BC handshake between the first apparatus and the second apparatus may establish the BC connection between the first apparatus and the second apparatus, to complete preparations before BC data synchronization.

Step D: The first apparatus sends third request information to the second apparatus. Correspondingly, the second apparatus receives the third request information from the first apparatus. The third request information is used to request to deploy the first SC.

Step E: The first apparatus synchronizes BC data with the second apparatus. The BC data includes the data of the first SC.

In other words, the first apparatus may first send a BC connection establishment request to the second apparatus, make a request to the second apparatus for deploying the first SC after establishing the BC connection to the second apparatus, and deploy the first SC through BC data synchronization.

It should be understood that for communication between the first apparatus and the second apparatus, to improve security, security verification may be completed between the first apparatus and the second apparatus in an identity authentication manner. The management network element may separately send information for identity authentication to the first apparatus and the second apparatus.

In a possible implementation, the first feedback information further includes first identity information. The first identity information is information indicating an identity of the first apparatus. Further, the second request information further includes the first identity information.

In a possible implementation, as shown in FIG. 6, the communication method provided in this embodiment of this application further includes the following step.

S605: The management network element sends second identity information to the second apparatus. Correspondingly, the second apparatus receives the second identity information from the management network element. The second identity information is information used by another apparatus to determine the identity of the first apparatus. The another apparatus is an apparatus other than the first apparatus.

Correspondingly, that the second apparatus sends the second feedback information to the first apparatus based on the second request information (that is, step S604-2 or step B) may include: The second apparatus sends the second feedback information to the first apparatus when the second apparatus determines, based on the second identity information, that identity authentication of the first apparatus succeeds.

It may be understood that the first identity information and the second identity information may be matched, that is, the second identity information may be used to verify whether the first identity information is correct. For example, the first identity information may be a token (token), the second identity information may also be a token (token), and there is a one-to-one correspondence between the first identity information and the second identity information. Alternatively, the first identity information may be an identity ID of the first apparatus, and the second identity information may also be an identity ID of the first apparatus. In this case, when the second request information includes the identity ID of the first apparatus, and the identity ID of the first apparatus is the same as the identity ID of the first apparatus that is sent by the management network element to the second apparatus, the second apparatus may determine that identity authentication of the first apparatus succeeds.

In a possible implementation, as shown in FIG. 6, the method provided in this embodiment of this application further includes the following step.

S606: The first apparatus sends a participant role of the first apparatus in the first SC to a BC node in the first BC, where the participant role includes at least one of the following: a verification role, a transaction role, a backup role, or a network access provision role.

It should be understood that for the decentralized 3GPP network, after the new first apparatus joins and deploys the first SC, the first BC changes. However, because there is no centralized management center for unified BC management, for a change of the BC, the node in the BC is not synchronized with the first apparatus. Therefore, the first apparatus needs to synchronize the change of the current BC.

In other words, after joining the first BC, the first apparatus may declare, to each node in the first BC, that the first apparatus has joined the BC, and the participant role of the first apparatus in the first SC.

It may be understood that the first apparatus may send the participant role of the first apparatus in the first SC to the BC node in the first BC in a broadcast manner, that is, the first apparatus sends the participant role of the first apparatus in the first SC to each node in the BC. Alternatively, the first apparatus may send the participant role of the first apparatus in the first SC to several nearby BC nodes, and indicate the several nearby BC nodes to send the participant role of the first apparatus in the first SC to another node in the BC.

Further, the first apparatus may further send the online duration estimated by the first apparatus, the capability information of the first apparatus, and the like to the BC node in the first BC, so that another node in the BC synchronizes a status of the first apparatus. This facilitates execution of the SC deployed on the BC, and can improve the quality of the decentralized 3GPP network service.

It should be understood that step S606 may be performed after the first apparatus synchronizes the BC data, for example, performed after step S604-3. Alternatively, step S606 may be performed after the first apparatus completes the handshake, for example, performed after step S604-6. This is not specifically limited in embodiments of this application.

In a possible implementation, as shown in FIG. 6, the method provided in this embodiment of this application further includes the following step.

S607: The first apparatus sends registration information to the registration network element or the management network element, where the registration information includes at least one of the following: information identifying a BC that the first apparatus joins, information indicating an SC deployed by the first apparatus, or a participant role of the first apparatus in the SC deployed by the first apparatus.

It should be understood that the information identifying the BC that the first apparatus joins may be, for example, an ID of the BC that the first apparatus joins, or information about a node in the BC. For details, refer to the related descriptions of step S602. Further, the information indicating the SC deployed by the first apparatus may include, for example, an ID of the SC, a function corresponding to the SC, or a matching condition corresponding to the SC.

In other words, the first apparatus sends the registration information to the registration network element or the management network element, so that the management network element can obtain latest change information of a BC in a current 3GPP network directly or via the registration management network element, to synchronize the latest change information of the BC in the 3GPP network, for example, information about a new node in the BC, a status of a deployed SC, and a participant role of the new node in the deployed SC. In this way, the management network element can manage and control the BC in the network and a new node pending to join the BC.

The following describes a network exit procedure of a BC node according to an embodiment of this application.

In a possible implementation, as shown in FIG. 6, the communication method provided in this embodiment of this application further includes the following steps.

S608: The first apparatus sends network exit information to the management network element. Correspondingly, the management network element receives the network exit information from the first apparatus. The network exit information indicates a BC from which the first apparatus expects to exit.

It may be understood that the first apparatus may expect to detach from one or more BCs. For example, the first apparatus joins three BCs, and the first apparatus currently expects to exit from two of the BCs.

Further, information indicating the BC from which the first apparatus expects to exit may include at least one of the following: an ID of the BC from which the first apparatus expects to exit, an ID of an SC deployed on the BC from which the first apparatus expects to exit, or an address of an entry node corresponding to the BC from which the first apparatus expects to exit.

S609: The management network element deletes, based on the network exit information, registration information of the first apparatus in the BC from which the first apparatus expects to exit.

In other words, when expecting to detach from the BC, the first apparatus may send the network exit information to the management network element responsible for managing the BC, so that the management network element can synchronize a status of the BC in time, to ensure management and control of a node pending to join the BC by the management network element. For example, a node intends to join the BC from which the first apparatus expects to exit. The first apparatus sends the network exit information. The BC management network element may determine that the first apparatus intends to detach from the BC and cannot serve as an entry node (that is, a second apparatus) of the node pending to join the BC, and therefore does not feed back address information of the first apparatus to the node, avoiding an access failure of the node.

In a possible implementation, that the management network element deletes, based on the network exit information, the registration information of the first apparatus in the BC from which the first apparatus expects to exit may include: The management network element sends deregistration request information to the registration network element, where the deregistration request information includes the information indicating the BC from which the first apparatus expects to exit. The management network element receives a deregistration request confirmation message from the registration network element, where the deregistration request confirmation message is used to confirm that the registration information of the first apparatus in the BC from which the first apparatus expects to exit has been deleted.

It may be understood that the management network element may place data related to the BC in the 3GPP network into the registration network element for unified storage and maintenance, so that storage load of the management network element can be reduced. Therefore, when the management network element deletes the registration information of the first apparatus in the BC from which the first apparatus expects to exit, deletion may be performed via the registration network element.

In a possible implementation, as shown in FIG. 6, the communication method provided in this embodiment of this application further includes the following step.

S610: The management network element sends network exit confirmation information to the first apparatus. Correspondingly, the first apparatus receives the network exit confirmation information from the management network element. The network exit confirmation information is used to confirm that the registration information of the first apparatus in the BC from which the first apparatus expects to exit has been deleted.

It may be understood that after deleting the registration information of the first apparatus in the BC from which the first apparatus expects to exit, the management network element sends the network exit confirmation information to the first apparatus to indicate that the network has made related preparations for the first apparatus to detach from the BC and notify the first apparatus that the first apparatus can detach from the BC.

It should be understood that the first apparatus may delete, based on the network exit confirmation information, BC data, for example, ledger data, of the BC from which the first apparatus expects to exit. The first apparatus may stop a BC protocol program script corresponding to the BC from which the first apparatus expects to exit. For another example, when the participant role of the first apparatus is the network access provision role, the first apparatus provides a BC access service by configuring a local radio interface. Therefore, when the first apparatus detaches from the network, the first apparatus may disable the local radio interface based on the network exit confirmation information.

In a possible implementation, the first apparatus may further send deletion confirmation information to the management network element, where the deletion confirmation information is used to confirm that the BC data of the BC from which the first apparatus expects to exit has been deleted from the first apparatus.

It may be understood that the BC is a decentralized network. After receiving the network exit information, the management network element may broadcast the network exit information to the BC from which the first apparatus expects to exit, so that each node in the BC from which the first apparatus expects to exit can synchronize a latest status of the BC.

In a possible implementation, as shown in FIG. 6, the communication method provided in this embodiment of this application further includes the following steps.

S611: The management network element sends network exit indication information to the second apparatus based on the network exit information. Correspondingly, the second apparatus receives the network exit indication information from the management network element. The network exit indication information indicates that the first apparatus detaches from the BC from which the first apparatus expects to exit.

It should be understood that to reduce storage overheads, the management network element or the registration network element may store only address information of an entry node (that is, the second apparatus) corresponding to each BC, and the management network element sends the network exit indication information to the second apparatus, so that the second apparatus broadcasts the network exit indication information to each node in the BC, to synchronize the latest status of the BC.

In a possible implementation, the communication method provided in this embodiment of this application further includes: The second apparatus obtains the network exit indication information, where the network exit indication information indicates that the first apparatus detaches from the BC from which the first apparatus expects to exit.

Further, the network exit indication information may be obtained from the management network element, or the network exit indication information may be obtained from the first apparatus.

S612: The second apparatus broadcasts, based on the network exit indication information, the network exit indication information to a BC node other than the first apparatus in the BC from which the first apparatus expects to exit.

It should be understood that step S611 may be performed after step S608. For example, step S611 may be performed before or after step S609, or step S611 and step S609 may be performed at the same time.

In another possible implementation, when sending the network exit information to the management network element, the first apparatus may also broadcast the network exit indication information to the BC from which the first apparatus expects to exit, so that the management network element and each node in the BC from which the first apparatus expects to exit can synchronize the latest status of the BC from which the first apparatus expects to exit. In other words, the management network element does not need to interact with the node in the BC from which the first apparatus expects to exit, to synchronize the latest status of the BC from which the first apparatus expects to exit. In this way, the signaling overheads can be reduced.

In this embodiment of this application, the first apparatus may send, to the management network element, the function corresponding to the SC that the first apparatus expects to deploy, and then receive the address information of the second apparatus from the management network element, so that the first apparatus may join, based on the address information of the second apparatus, the BC that the second apparatus joins, that is, the first BC, to obtain the data of the first SC in the SC that the first apparatus expects to deploy, to deploy the first SC. In other words, for the first apparatus pending to join a BC in the decentralized communication network, the first apparatus is unaware of information about a node of a BC in the communication network and an SC deployed on the BC, but obtains the address information of the second apparatus via the management network element, to determine a BC that the first apparatus can join and an SC that the first apparatus can deploy, that is, the BC that the first apparatus joins and the SC deployed by the first apparatus are managed and controlled by the management network element. Therefore, according to the communication method provided in this embodiment of this application, a new node pending to join a BC can be managed and controlled in the decentralized communication network, to implement optimization of a communication network service.

The actions of the first apparatus in steps S601 to S612 may be performed by the communication apparatus 500 indicated by invoking, by the processor 501 in the communication apparatus 500 shown in FIG. 5, the application program code stored in the memory 503. The actions of the management network element in steps S601 to S612 may be performed by the communication apparatus 500 indicated by invoking, by the processor 501 in the communication apparatus 500 shown in FIG. 5, the application program code stored in the memory 503. The actions of the second apparatus in steps S601 to S612 may be performed by the communication apparatus 500 indicated by invoking, by the processor 501 in the communication apparatus 500 shown in FIG. 5, the application program code stored in the memory 503. This is not limited in embodiments of this application.

According to the foregoing descriptions related to verification of the validity of the first apparatus joining the BC in step S601, the validity verification may be performed before step S601. The following uses an example in which the first apparatus is a CN device and the second apparatus is a CN device to describe the communication method provided in embodiments of this application with reference to a validity verification procedure between the management network element and the first apparatus. FIG. 8 is a schematic flowchart of another communication method according to an embodiment of this application. As shown in FIG. 8, the method includes the following steps.

S801: A first apparatus sends a network access request to a management network element. Correspondingly, the management network element receives the network access request from the first apparatus. The network access request may include an identity ID of the first apparatus.

S802: The management network element sends a network access request result to the first apparatus. Correspondingly, the first apparatus receives the network access request result from the management network element. The network access request result is determined based on a verification result of the identity ID of the first apparatus. For example, when verification of the identity ID of the first apparatus succeeds, the network access request result indicates that the network access request of the first apparatus is accepted. For another example, when verification of the identity ID of the first apparatus fails, the network access request result indicates that the network access request of the first apparatus is refused. It may be understood that the management network element may configure a function for identity authentication of the first apparatus, that is, the management network element may locally verify the identity ID of the first apparatus, to determine validity of the first apparatus joining a BC. It may be further understood that because a CN device and a RAN device are infrastructure of a 3GPP network element, the management network element may determine permission of the CN device and the RAN device to join the BC.

Further, optionally, when verification of the identity ID of the first apparatus succeeds, the network access request result may include first identity information. The first identity information may be a network access license credential (for example, a token).

It may be understood that steps S801 and S802 are a related procedure of verifying the validity of the first apparatus joining the BC. After verification of the validity of the first apparatus joining the BC succeeds, the first apparatus may send first request information to the management network element (that is, step S601).

S803: The first apparatus sends a BC joining and SC deployment request to the management network element. Correspondingly, the management network element receives the BC joining and SC deployment request from the first apparatus. The BC joining and SC deployment request includes the first request information, that is, a function corresponding to an SC that the first apparatus expects to deploy.

For a specific implementation of step S803, refer to step S601. Details are not described herein again.

S804: The management network element determines address information of a second apparatus and a first SC based on the BC joining and SC deployment request.

For a specific implementation of step S804, refer to step S602. Details are not described herein again.

Optionally, the management network element may obtain a query result from a registration network element. The query result includes an SC that has been deployed in the current network, and address information of an entry node corresponding to a BC on which the SC is deployed. It may be understood that the SC that has been deployed in the current network may be the candidate SC set in step S601.

S805: The management network element sends a first feedback result to the first apparatus. Correspondingly, the first apparatus receives the first feedback result from the management network element. The first feedback result includes a plurality of first SCs and address information of a second apparatus corresponding to each of the plurality of first SCs. For a specific implementation of step S805, refer to step S603. Details are not described herein again.

Optionally, the management network element may further send second identity information to the second apparatus. Correspondingly, the second apparatus receives the second identity information from the management network element. The second identity information may be used to notify the second apparatus that the first apparatus intends to establish a BC connection to the second apparatus. The second identity information may include identity information of the first apparatus, for example, an address of the first apparatus or an identity ID (for example, the node ID in Table 1) of the first apparatus. It may be understood that for a specific implementation in which the management network element sends the second identity information to the second apparatus, refer to step S605. Details are not described herein again.

S806: The first apparatus sends a connection request to the second apparatus. Correspondingly, the second apparatus receives the connection request from the first apparatus. The connection request may include the first identity information. The first identity information may be the network access license credential in step S802.

It may be understood that for a specific implementation of step S806, refer to step S604-1 or step A. Details are not described herein again.

Optionally, the second apparatus may verify the network access license credential in the connection request based on the identity information of the first apparatus.

Further, optionally, when the second apparatus determines, based on the second identity information, that identity authentication of the first apparatus succeeds, the second apparatus sends second feedback information to the first apparatus. The second feedback information may indicate that the second apparatus agrees to establish the BC connection to the first apparatus. The second feedback may include data of a BC protocol corresponding to a first BC. It should be understood that for a specific implementation in which the second apparatus sends the second feedback information to the first apparatus, refer to step S604-2 or step B. Details are not described herein again.

It may be understood that for the BC protocol, the first apparatus may obtain the BC protocol via the registration network element or the management network element before sending the connection request to the second apparatus.

It may be further understood that when the second apparatus determines, based on the second identity, that identity authentication of the first apparatus fails, the second apparatus sends second feedback information to the first apparatus. The second feedback information may indicate that the second apparatus refuses to establish the BC connection to the first apparatus. Certainly, the second apparatus may not send any feedback information to the first apparatus, to indicate that the second apparatus refuses to establish the BC connection to the first apparatus. Alternatively, optionally, when the second apparatus determines, based on the second identity information, that identity authentication of the first apparatus succeeds, a BC handshake, that is, step S807, may be performed between the first apparatus and the second apparatus.

S807: Perform the BC handshake between the first apparatus and the second apparatus based on the BC protocol corresponding to the first BC.

For a specific implementation of step S807, refer to step C. Details are not described herein again.

S808: The first apparatus sends an ID or IDs of one or more first SCs to the second apparatus. Correspondingly, the second apparatus receives the ID or IDs of the one or more first SCs from the first apparatus.

For a specific implementation of step S808, refer to step D. Details are not described herein again.

S809: The first apparatus sends a participant role of the first apparatus in the first SC to a BC node in the first BC.

For a specific implementation of step S809, refer to step S606. Details are not described herein again.

S810: Synchronize BC data between the first apparatus and the second apparatus, where the BC data includes data of the one or more first SCs.

For a specific implementation of step S810, refer to step E. Details are not described herein again.

It may be understood that after steps S803 to S810, the first apparatus completes joining the first BC and deploying the first SC. After completing deploying the first SC, the first apparatus may register, with the 3GPP network, related information of a BC that the first apparatus joins, so that the management network element can obtain a latest status of the BC in the current 3GPP network, helping the management network element manage and control the BC in the 3GPP network and a new node pending to join the BC.

S811: The first apparatus sends registration information to the registration network element. Correspondingly, the registration network element receives the registration information from the first apparatus.

For a specific implementation of step S811, refer to step S607. Details are not described herein again.

In this embodiment of this application, the management network element may verify the validity of the first apparatus joining the BC, to improve security of access of a node to the BC in the decentralized 3GPP network. Further, after verification of the validity of the first apparatus joining the BC succeeds, the first apparatus may send, to the management network element, the function corresponding to the SC that the first apparatus expects to deploy, then receive the address information of the second apparatus from the management network element, and join the BC that the second apparatus joins, to deploy the first SC, that is, the BC that the first apparatus joins and an SC deployed by the first apparatus are managed and controlled by the management network element. Therefore, according to the communication method provided in this embodiment of this application, a new node pending to join a BC can be managed and controlled in the decentralized network, to implement optimization of a network service. The actions of the first apparatus in steps S801 to S811 may be performed by the communication apparatus 500 indicated by invoking, by the processor 501 in the communication apparatus 500 shown in FIG. 5, the application program code stored in the memory 503. The actions of the management network element in steps S801 to S811 may be performed by the communication apparatus 500 indicated by invoking, by the processor 501 in the communication apparatus 500 shown in FIG. 5, the application program code stored in the memory 503. The actions of the second apparatus in steps S801 to S811 may be performed by the communication apparatus 500 indicated by invoking, by the processor 501 in the communication apparatus 500 shown in FIG. 5, the application program code stored in the memory 503. This is not limited in embodiments of this application.

It should be understood that in addition to local verification by the management network element, verification of the validity of the first apparatus joining the BC may be verification by a device management node. For example, for a terminal device that does not belong to non-3GPP network infrastructure, the management network element may not configure permission for the terminal device to join a BC, so that validity of the terminal device joining a BC may be verified by the device management node. The following uses an example in which the first apparatus is a 3GPP terminal device and the second apparatus is a CN device to describe the communication method provided in embodiments of this application.

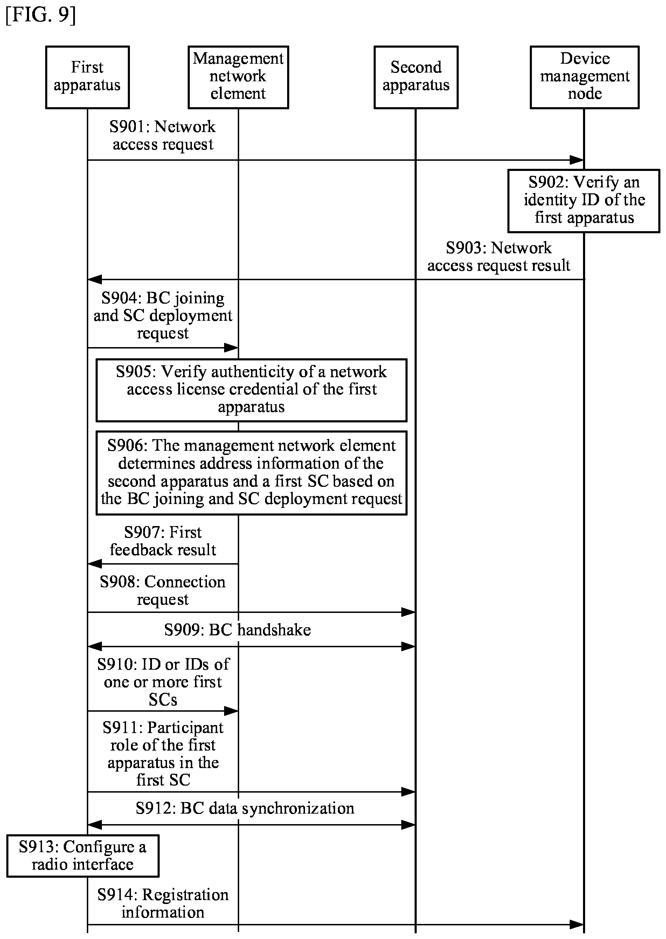

FIG. 9 is a schematic flowchart of still another communication method according to an embodiment of this application. As shown in FIG. 9, the method includes the following steps S901 to S914. For steps S906 to S912, refer to steps S804 to S810. Details are not described herein again.

The following describes steps S901 to S905.

S901: A first apparatus sends a network access request to a device management node. Correspondingly, the device management node receives the network access request from the first apparatus. The network access request may include an identity ID of the first apparatus.

It should be understood that the device management node is a communication entity that verifies validity of the first apparatus joining a BC. The device management node has a function of identity authentication of the first apparatus, and a configuration of permission for the first apparatus to join the BC. The device management node may be deployed on a CN side, a RAN side, or a cloud side. Further, the device management node may be an independent node, and does not undertake a wireless communication function.

It should be further understood that in this embodiment of this application, as a 3GPP network evolves, a subscriber identity module (subscriber identity module, SIM) of a terminal device, a network access license code of the terminal device, an international mobile equipment identity (international mobile equipment identity, IMEI) of the terminal device, or the like may be bound to permission for the terminal device to join a BC, so that a management network element may also verify validity of the 3GPP terminal device joining the BC. For example, the management network element may verify, by using the SIM of the 3GPP terminal device, the validity of the 3GPP terminal device joining the BC.

S902: The device management node verifies the identity ID of the first apparatus.

It may be understood that the device management node may determine, based on the configuration of the permission for the first apparatus to join the BC and the identity ID of the first apparatus, whether the first apparatus is allowed to join the BC.

S903: The device management node sends a network access request result to the first apparatus. Correspondingly, the first apparatus receives the network access request result from the device management node. For details about the network access request result, refer to the related descriptions of step S802. Details are not described herein again.

Optionally, the device management node may send a verification result of the first apparatus to the management network element. Correspondingly, the management network element receives the verification result from the device management node. In other words, the management network element may obtain, from the device management node, the verification result of the validity of the first apparatus joining the BC.

S904: The first apparatus sends a BC joining and SC deployment request to the management network element. Correspondingly, the management network element receives the BC joining and SC deployment request from the first apparatus.

A difference between step S904 and step S803 lies in that the BC joining and SC deployment request further includes first identity information, that is, a network access license credential, in step S903.

S905: The management network element verifies authenticity of the network access license credential of the first apparatus.

In a possible implementation, the management network element may verify the authenticity of the network access license credential of the first apparatus based on the verification result from the device management node. For details of the verification result from the device management node, refer to the related descriptions of step S903. Details are not described herein again.

In another possible implementation, the management network element may send a verification request to the device management node. Correspondingly, the device management node receives the verification request from the management network element. The verification request is used to verify the authenticity of the network access license credential of the first apparatus. The verification request includes the network access license credential.

Further, the device management node sends the verification result to the management network element. Correspondingly, the management network element receives the verification result from the device management node. The management network element may verify the authenticity of the network access license credential of the first apparatus based on the verification result from the device management node. It may be understood that if the verification result indicates that the network access license credential of the first apparatus is not authentic, the management network element may refuse the BC joining and SC deployment request of the first apparatus; or if the verification result indicates that the network access license credential of the first apparatus is authentic, the management network element may determine address information of a second apparatus and a first SC based on the BC joining and SC deployment request (that is, step S906).

The following describes step S913 and step S914.

S913: The first apparatus configures a radio interface. The radio interface is configured to provide an access service. It may be understood that a device type of the first apparatus is a 3GPP terminal device. When a participant role of the first apparatus is a network access provision role, the first apparatus may provide a BC access service by configuring a local radio interface, for example, a Wi-Fi hotspot.

It may be understood that step S913 is an optional step. When the participant role of the first apparatus is not the network access provision role, the first apparatus may not configure the radio interface.

S914: The first apparatus sends registration information to the device management node. Correspondingly, the device management node receives the registration information from the first apparatus. In other words, the device management node may obtain information about the 3GPP terminal device and a BC corresponding to the 3GPP terminal device in the current 3GPP network, helping the management network element manage and control a new node of a 3GPP terminal device type.

For specific descriptions of the registration information, refer to step S607. Details are not described herein again.

Optionally, the device management node may send the registration information to a registration network element. Correspondingly, the registration network element receives the registration information from the device management node. In other words, the device management node sends the registration information to the registration network element, so that the registration network element can obtain a latest status of the BC in the current 3GPP network, helping the management network element manage and control the BC in the 3GPP network and a new node pending to join the BC.

In this embodiment of this application, the device network element may enable the management network element to determine the validity of the first apparatus joining the BC, to improve security of access of a node to the BC in the decentralized 3GPP network. Further, after verification of the validity of the first apparatus joining the BC succeeds, the first apparatus may send, to the management network element, a function corresponding to an SC that the first apparatus expects to deploy, then receive the address information of the second apparatus from the management network element, and join a BC that the second apparatus joins, to deploy the first SC, that is, a BC that the first apparatus joins and an SC deployed by the first apparatus are managed and controlled by the management network element. Therefore, according to the communication method provided in this embodiment of this application, a new node pending to join a BC can be managed and controlled in the decentralized network, to implement optimization of a network service.

The actions of the first apparatus in steps S901 to S914 may be performed by the communication apparatus 500 indicated by invoking, by the processor 501 in the communication apparatus 500 shown in FIG. 5, the application program code stored in the memory 503. The actions of the management network element in steps S901 to S914 may be performed by the communication apparatus 500 indicated by invoking, by the processor 501 in the communication apparatus 500 shown in FIG. 5, the application program code stored in the memory 503. The actions of the second apparatus in steps S901 to S914 may be performed by the communication apparatus 500 indicated by invoking, by the processor 501 in the communication apparatus 500 shown in FIG. 5, the application program code stored in the memory 503. This is not limited in embodiments of this application.

It should be understood that the first apparatus whose device type is a non-3GPP terminal device may access the 3GPP network via a gateway node, to join the BC in the 3GPP network. The following uses an example in which the first apparatus is a non-3GPP terminal device and the second apparatus is a non-3GPP terminal device to describe the communication method provided in embodiments of this application.

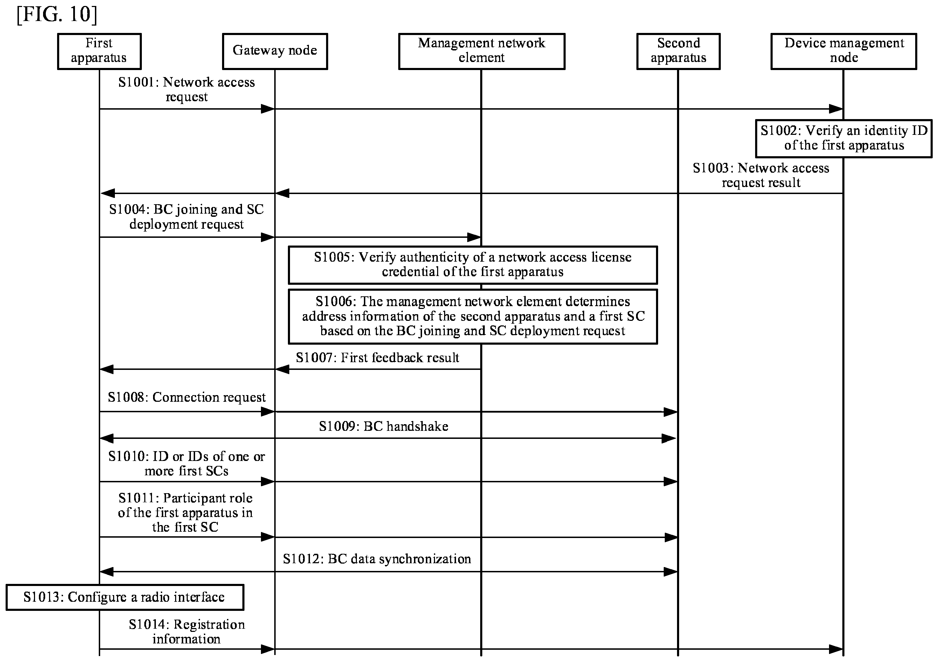

FIG. 10 is a schematic flowchart of another communication method according to an embodiment of this application. As shown in FIG. 10, the method includes the following steps S1001 to S1014. For step S1013, refer to step S913. Details are not described herein again.

Further, steps S1001 to S1005 and S1014 are similar to steps S901 to S905 and S914. A difference therebetween lies in that a gateway node performs forwarding for interaction between a first apparatus and a device management node and interaction between the first apparatus and a management network element. The gateway node may be a 3GPP terminal device. It may be understood that networking may be performed between the first apparatus and the gateway node by using a PIN standard procedure, or networking may be performed in the ProSe mode in the related descriptions of FIG. 1. Details are not described herein again. It may be further understood that for the PIN standard procedure, refer to related descriptions of a PIN standard. Details are not described herein again.

For example, for step S1001, that the first apparatus sends a network access request to the device management node is specifically: The first apparatus sends the network access request to the gateway node. Correspondingly, the gateway node receives the network access request from the first apparatus, and forwards the network access request to the device management node by using a 3GPP access network.

It should be understood that in some cases, a second apparatus may be the gateway node. For example, when a first SC is deployed on the gateway node, and the gateway node is close to the first apparatus, the gateway node may be the second apparatus.

Further, when the second apparatus is the gateway node, for a specific implementation of steps S1006 to S1012, refer to steps S906 to S912. Details are not described herein again.

It should be further understood that the second apparatus may not be the gateway node. When the second apparatus is not the gateway node, steps S1006 to S1012 are similar to steps S906 to S912. A difference therebetween lies in that the gateway node performs forwarding for interaction between the first apparatus and the second apparatus. For example, the first apparatus may send a connection request to the second apparatus through forwarding via the gateway node.

Similarly, in the network exit procedure shown in FIG. 6, for example, steps S608 to S612, interaction between the first apparatus and the management network element may be completed by the gateway node. For details, refer to steps S1006 to S1012. Details are not described again.

The actions of the first apparatus in steps S1001 to S1014 may be performed by the communication apparatus 500 indicated by invoking, by the processor 501 in the communication apparatus 500 shown in FIG. 5, the application program code stored in the memory 503. The actions of the management network element in steps S1001 to S1014 may be performed by the communication apparatus 500 indicated by invoking, by the processor 501 in the communication apparatus 500 shown in FIG. 5, the application program code stored in the memory 503. The actions of the second apparatus in steps S1001 to S1014 may be performed by the communication apparatus 500 indicated by invoking, by the processor 501 in the communication apparatus 500 shown in FIG. 5, the application program code stored in the memory 503. This is not limited in embodiments of this application.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the first apparatus in the method embodiments, an apparatus including the first apparatus, or a component that can be used in the first apparatus. Alternatively, the communication apparatus may be the second apparatus in the method embodiments, an apparatus including the second apparatus, or a component that can be used in the second apparatus. It may be understood that to implement the foregoing functions, the communication apparatus includes a corresponding hardware structure and/or software module for performing each function. A person skilled in the art should be easily aware that units and algorithm steps in the examples described with reference to embodiments disclosed in this specification may be implemented in a form of hardware or in a form of a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

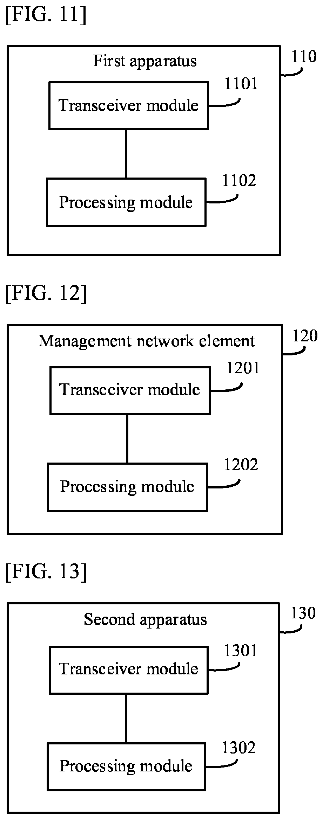

For example, the communication apparatus is the first apparatus in the method embodiments. FIG. 11 is a diagram of a structure of a first apparatus 110. The first apparatus 110 includes a transceiver module 1101 and a processing module 1102. The transceiver module 1101 may also be referred to as a transceiver unit, and is configured to implement a transceiver function. For example, the transceiver module may be a transceiver circuit, a transceiver machine, a transceiver, or a communication interface.

The transceiver module 1101 is configured to send first request information to a management network element, where the first request information includes a function corresponding to a smart contract SC that the first apparatus expects to deploy. The transceiver module 1101 is further configured to receive first feedback information from the management network element, where the first feedback information includes address information of a second apparatus, and an SC deployed by the second apparatus includes a first SC in the SC that the first apparatus expects to deploy. The processing module 1102 is configured to obtain data of the first SC based on the address information of the second apparatus.

The transceiver module 1101 may be configured to implement a transceiver function corresponding to the first apparatus in the method embodiments, and the processing module 1102 may be configured to implement a processing function corresponding to the first apparatus in the method embodiments. Therefore, all related content of each step in the method embodiments may be cited in function descriptions of a corresponding functional module. Details are not described herein again.

In this embodiment of this application, the first apparatus 110 is presented in a form of obtaining the functional modules through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the first apparatus 110 may be in a form of the communication apparatus 500 shown in FIG. 5.

For example, the processor 501 in the communication apparatus 500 shown in FIG. 5 may invoke computer-executable instructions stored in the memory 503, to enable the communication apparatus 500 to perform the communication method in the method embodiments.

Specifically, functions/implementation processes of the transceiver module 1101 and the processing module 1102 in FIG. 11 may be implemented by the processor 501 in the communication apparatus 500 shown in FIG. 5 by invoking the computer-executable instructions stored in the memory 503. Alternatively, a function/an implementation process of the processing module 1102 in FIG. 11 may be implemented by the processor 501 in the communication apparatus 500 shown in FIG. 5 by invoking the computer-executable instructions stored in the memory 503, and a function/an implementation process of the transceiver module 1101 in FIG. 11 may be implemented by the communication interface 504 in the communication apparatus 500 shown in FIG. 5.

The first apparatus 110 provided in this embodiment of this application can perform the foregoing communication methods. Therefore, for technical effects that can be achieved by the first apparatus 110, refer to the method embodiments. Details are not described herein again.

Alternatively, for example, the communication apparatus is the management network element in the method embodiments. FIG. 12 is a diagram of a structure of a management network element 120. The management network element 120 includes a transceiver module 1201 and a processing module 1202. The transceiver module 1201 may also be referred to as a transceiver unit, and is configured to implement a transceiver function. For example, the transceiver module may be a transceiver circuit, a transceiver machine, a transceiver, or a communication interface.

The transceiver module 1201 is configured to receive first request information from a first apparatus, where the first request information includes a function corresponding to a smart contract SC that the first apparatus expects to deploy. The processing module 1202 is configured to determine address information of a second apparatus based on the first request information, where an SC deployed by the second apparatus includes a first SC in the SC that the first apparatus expects to deploy. The transceiver module 1201 is further configured to send, by the management network element, first feedback information to the first apparatus, where the first feedback information includes the address information of the second apparatus.

The transceiver module 1201 may be configured to implement a transceiver function corresponding to the management network element in the method embodiments, and the processing module 1202 may be configured to implement a processing function corresponding to the management network element in the method embodiments. Therefore, all related content of each step in the method embodiments may be cited in function descriptions of a corresponding functional module. Details are not described herein again.

In this embodiment of this application, the management network element 120 is presented in a form of obtaining the functional modules through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the management network element 120 may be in a form of the communication apparatus 500 shown in FIG. 5.

For example, the processor 501 in the communication apparatus 500 shown in FIG. 5 may invoke computer-executable instructions stored in the memory 503, to enable the communication apparatus 500 to perform the communication method in the method embodiments.

Specifically, functions/implementation processes of the transceiver module 1201 and the processing module 1202 in FIG. 12 may be implemented by the processor 501 in the communication apparatus 500 shown in FIG. 5 by invoking the computer-executable instructions stored in the memory 503. Alternatively, a function/an implementation process of the processing module 1202 in FIG. 12 may be implemented by the processor 501 in the communication apparatus 500 shown in FIG. 5 by invoking the computer-executable instructions stored in the memory 503, and a function/an implementation process of the transceiver module 1201 in FIG. 12 may be implemented by the communication interface 504 in the communication apparatus 500 shown in FIG. 5.

The management network element 120 provided in this embodiment can perform the foregoing communication methods. Therefore, for technical effects that can be achieved by the management network element 120, refer to the method embodiments. Details are not described herein again.

Alternatively, for example, the communication apparatus is the second apparatus in the method embodiments. FIG. 13 is a diagram of a structure of a second apparatus 130. The second apparatus 130 includes a transceiver module 1301 and a processing module 1302. The transceiver module 1301 may also be referred to as a transceiver unit, and is configured to implement a transceiver function. For example, the transceiver module may be a transceiver circuit, a transceiver machine, a transceiver, or a communication interface.

The transceiver module 1301 is configured to receive second request information from a first apparatus, where the second request information is used to request to deploy a first SC in a smart contract SC that the first apparatus expects to deploy, and an SC deployed by the second apparatus includes the first SC. The transceiver module 1301 is further configured to send second feedback information to the first apparatus based on the second request information, where the second feedback information includes data of a BC protocol corresponding to the first BC. The processing module 1302 is configured to synchronize BC data with the first apparatus based on the BC protocol corresponding to the first BC, where the BC data includes data of the first SC.

The transceiver module 1301 may be configured to implement a transceiver function corresponding to the second apparatus in the method embodiments, and the processing module 1302 may be configured to implement a processing function corresponding to the second apparatus in the method embodiments. Therefore, all related content of each step in the method embodiments may be cited in function descriptions of a corresponding functional module. Details are not described herein again.

In this embodiment of this application, the second apparatus 130 is presented in a form of obtaining the functional modules through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the second apparatus 130 may be in a form of the communication apparatus 500 shown in FIG. 5.

For example, the processor 501 in the communication apparatus 500 shown in FIG. 5 may invoke computer-executable instructions stored in the memory 503, to enable the communication apparatus 500 to perform the communication method in the method embodiments.

Specifically, functions/implementation processes of the transceiver module 1301 and the processing module 1302 in FIG. 13 may be implemented by the processor 501 in the communication apparatus 500 shown in FIG. 5 by invoking the computer-executable instructions stored in the memory 503. Alternatively, a function/an implementation process of the processing module 1302 in FIG. 13 may be implemented by the processor 501 in the communication apparatus 500 shown in FIG. 5 by invoking the computer-executable instructions stored in the memory 503, and a function/an implementation process of the transceiver module 1301 in FIG. 13 may be implemented by the communication interface 504 in the communication apparatus 500 shown in FIG. 5.

The second apparatus 130 provided in this embodiment can perform the foregoing communication methods. Therefore, for technical effects that can be achieved by the second apparatus 130, refer to the method embodiments. Details are not described herein again.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built into a SoC (system on chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the method embodiments. In a possible design, the communication apparatus further includes a memory. The memory is configured to store necessary program instructions and data. The processor may invoke program code stored in the memory, to indicate the communication apparatus to perform the method in any one of the method embodiments. Certainly, the memory may alternatively be not in the communication apparatus. When the communication apparatus is the chip system, the communication apparatus may include a chip, or may include a chip and another discrete component. This is not specifically limited in embodiments of this application.

In a possible implementation, an embodiment of this application further provides a computer-readable storage medium. The computer-readable storage medium stores a computer program or instructions. When the computer program or instructions are run on a communication apparatus, the communication apparatus is enabled to perform the method in any one of the method embodiments or any one of the implementations of the method embodiments.

In a possible implementation, an embodiment of this application further provides a communication system. The communication system includes the first apparatus in the method embodiments and the management network element in the method embodiments.

Further, optionally, the communication system further includes the second apparatus in the method embodiments.

In a possible implementation, an embodiment of this application further provides a communication method. The communication method includes the method in any one of the method embodiments or any one of the implementations of the method embodiments.

All or some of the foregoing embodiments may be implemented by software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
sending, by the first apparatus, first request information to the management network element, wherein the first request information comprises a function corresponding to a smart contract SC that the first apparatus expects to deploy;
sending, by the management network element, first feedback information to the first apparatus based on the first request information, wherein the first feedback information comprises address information of a second apparatus, an SC deployed by the second apparatus comprises a first SC in the SC that the first apparatus expects to deploy, and the first SC is deployed on a first BC; and
obtaining, by the first apparatus, data of the first SC based on the address information of the second apparatus.

2. The method according to claim 1, wherein obtaining, by the first apparatus, the data of the first SC based on the address information of the second apparatus comprises:
sending, by the first apparatus, second request information to the second apparatus based on the address information of the second apparatus, wherein the second request information is used to request to deploy the first SC;
sending, by the second apparatus, second feedback information to the first apparatus based on the second request information, wherein the second feedback information comprises data of a BC protocol corresponding to the first BC; and
synchronizing BC data between the first apparatus and the second apparatus by using the BC protocol corresponding to the first BC, wherein the BC data comprises the data of the first SC.

3. The method according to claim 1 or 2, wherein the first request information further comprises at least one of the following: type information of the first apparatus, operating of the first apparatus, or capability information of the first apparatus.

4. The method according to claim 3, wherein the type information of the first apparatus
specifically comprises a device type of the first apparatus and/or a participant role type of the first apparatus in the SC that the first apparatus expects to deploy;
the operating of the first apparatus specifically comprises online duration estimated by the first apparatus and/or an online time period estimated by the first apparatus; and
the capability information of the first apparatus specifically comprises at least one of the following: a computing capability of the first apparatus, a storage capability of the first apparatus, or a network connection capability of the first apparatus.

5. The method according to any one of claims 1 to 4, wherein the method further comprises:
determining the first SC from a candidate SC set based on the first request information and a matching condition corresponding to at least one SC in the candidate SC set; and
determining the address information of the second apparatus based on the first SC.

6. The method according to claim 5, wherein the candidate SC set is obtained from a registration network element, and the registration network element is configured to store an SC deployed on each of a plurality of BCs managed by the management network element.

7. The method according to claim 5 or 6, wherein the matching condition corresponding to the at least one SC in the candidate SC set is preconfigured; or the matching condition corresponding to the at least one SC in the candidate SC set is obtained from the registration network element, and the registration network element is configured to store the SC deployed on each of the plurality of BCs managed by the management network element and a matching condition corresponding to the SC deployed on each of the plurality of BCs.

8. The method according to any one of claims 2 to 7, wherein the method further comprises:
sending, by the management network element, second identity information to the second apparatus, wherein the second identity information is information used by another apparatus to determine an identity of the first apparatus, and the another apparatus is an apparatus other than the first apparatus; and
correspondingly, sending, by the second apparatus, the second feedback information to the first apparatus based on the second request information comprises: sending, by the second apparatus, the second feedback information to the first apparatus when determining, based on the second identity information, that identity authentication of the first apparatus succeeds.

9. The method according to any one of claims 2 to 8, wherein the first feedback information further comprises first identity information, the first identity information is information indicating the identity of the first apparatus, and the second request information further comprises the first identity information.

10. The method according to any one of claims 1 to 9, wherein the method further comprises:
sending, by the first apparatus, a participant role of the first apparatus in the first SC to a BC node in the first BC, wherein the participant role comprises at least one of the following: a verification role, a transaction role, a backup role, or a network access provision role.

11. The method according to any one of claims 1 to 10, wherein the method further comprises:
sending, by the first apparatus, registration information to the registration network element or the management network element, wherein the registration information comprises at least one of the following: information identifying a BC that the first apparatus joins, information indicating an SC deployed by the first apparatus, or a participant role of the first apparatus in the SC deployed by the first apparatus.

12. The method according to any one of claims 1 to 11, wherein the method further comprises:
sending, by the first apparatus, network exit information to the management network element, wherein the network exit information indicates a BC from which the first apparatus expects to exit; and
deleting, by the management network element based on the network exit information, registration information of the first apparatus in the BC from which the first apparatus expects to exit.

13. The method according to claim 12, wherein deleting, by the management network element based on the network exit information, the registration information of the first apparatus in the BC from which the first apparatus expects to exit comprises:
sending, by the management network element, deregistration request information to the registration network element, wherein the deregistration request information comprises information indicating the BC from which the first apparatus expects to exit; and
receiving, by the management network element, a deregistration request confirmation message from the registration network element, wherein the deregistration request confirmation message is used to confirm that the registration information of the first apparatus in the BC from which the first apparatus expects to exit has been deleted.

14. The method according to claim 12 or 13, wherein the method further comprises:
sending, by the management network element, network exit confirmation information to the first apparatus, wherein the network exit confirmation information is used to confirm that the registration information of the first apparatus in the BC from which the first apparatus expects to exit has been deleted; and
receiving, by the first apparatus, the network exit confirmation information from the management network element.

15. The method according to any one of claims 12 to 14, wherein the method further comprises:
sending, by the management network element, network exit indication information to the second apparatus based on the network exit information, wherein the network exit indication information indicates that the first apparatus detaches from the BC from which the first apparatus expects to exit; and
receiving, by the second apparatus, the network exit indication information from the management network element.

16. The method according to claim 15, wherein the method further comprises:
broadcasting, by the second apparatus based on the network exit indication information, the network exit indication information to a BC node other than the first apparatus in the BC from which the first apparatus expects to exit.

17. A communication method, wherein the method comprises:
sending, by a first apparatus, first request information to a management network element, wherein the first request information comprises a function corresponding to a smart contract SC that the first apparatus expects to deploy;
receiving, by the first apparatus, first feedback information from the management network element, wherein the first feedback information comprises address information of a second apparatus, an SC deployed by the second apparatus comprises a first SC in the SC that the first apparatus expects to deploy, and the first SC is deployed on a first BC; and
obtaining, by the first apparatus, data of the first SC based on the address information of the second apparatus.

18. The method according to claim 17, wherein the first request information further comprises at least one of the following: type information of the first apparatus, operating of the first apparatus, or capability information of the first apparatus.

19. The method according to claim 18, wherein the type information of the first apparatus specifically comprises a device type of the first apparatus and/or a participant role type of the first apparatus in the SC that the first apparatus expects to deploy;
the operating of the first apparatus specifically comprises online duration estimated by the first apparatus and/or an online time period estimated by the first apparatus;
and
the capability information of the first apparatus specifically comprises at least one of the following: a computing capability of the first apparatus, a storage capability of the first apparatus, or a network connection capability of the first apparatus.

20. The method according to any one of claims 17 to 19, wherein obtaining, by the first apparatus, the data of the first SC based on the address information of the second apparatus comprises:
sending, by the first apparatus, second request information to the second apparatus based on the address information of the second apparatus, wherein the second request information is used to request to deploy the first SC;
receiving, by the first apparatus, second feedback information from the second apparatus, wherein the second feedback information comprises data of a BC protocol corresponding to the first BC; and
synchronizing, by the first apparatus, BC data with the second apparatus based on the BC protocol corresponding to the first BC, wherein the BC data comprises the data of the first SC.

21. The method according to claim 20, wherein the first feedback information further comprises first identity information, the first identity information is information indicating an identity of the first apparatus, and the second request information further comprises the first identity information.

22. The method according to any one of claims 17 to 21, wherein the method further comprises:
sending, by the first apparatus, a participant role of the first apparatus in the first SC to a BC node in the first BC, wherein the participant role comprises at least one of the following: a verification role, a transaction role, a backup role, or a network access provision role.

23. The method according to any one of claims 17 to 22, wherein the method further comprises:
sending, by the first apparatus, registration information to a registration network element or the management network element, wherein the registration information comprises at least one of the following: information identifying a BC that the first apparatus joins, information indicating an SC deployed by the first apparatus, or a participant role of the first apparatus in the SC deployed by the first apparatus.

24. The method according to any one of claims 17 to 23, wherein the method further comprises:
sending, by the first apparatus, network exit information to the management network element, wherein the network exit information indicates a BC from which the first apparatus expects to exit.

25. The method according to claim 24, wherein the method further comprises:
receiving, by the first apparatus, network exit confirmation information from the management network element, wherein the network exit confirmation information is used to confirm that registration information of the first apparatus in the BC from which the first apparatus expects to exit has been deleted.

26. A communication method, wherein the method comprises:
receiving, by a management network element, first request information from a first apparatus, wherein the first request information comprises a function corresponding to a smart contract SC that the first apparatus expects to deploy;
determining, by the management network element, address information of a second apparatus based on the first request information, wherein an SC deployed by the second apparatus comprises a first SC in the SC that the first apparatus expects to deploy; and
sending, by the management network element, first feedback information to the first apparatus, wherein the first feedback information comprises the address information of the second apparatus.

27. The method according to claim 26, wherein the first request information further comprises at least one of the following: type information of the first apparatus, operating of the first apparatus, or capability information of the first apparatus.

28. The method according to claim 27, wherein the type information of the first apparatus specifically comprises a device type of the first apparatus and/or a participant role type of the first apparatus in the SC that the first apparatus expects to deploy;
the operating of the first apparatus specifically comprises online duration estimated by the first apparatus and/or an online time period estimated by the first apparatus; and
the capability information of the first apparatus specifically comprises at least one of the following: a computing capability of the first apparatus, a storage capability of the first apparatus, or a network connection capability of the first apparatus.

29. The method according to any one of claims 26 to 28, wherein determining, by the management network element, the address information of the second apparatus based on the first request information comprises:
determining, by the management network element, the first SC from a candidate SC set based on the first request information and a matching condition corresponding to at least one SC in the candidate SC set; and
determining, by the management network element, the address information of the second apparatus based on the first SC.

30. The method according to claim 29, wherein the candidate SC set is obtained from a registration network element, and the registration network element is configured to store an SC deployed on each of a plurality of blockchains BCs managed by the management network element.

31. The method according to claim 29 or 30, wherein the matching condition corresponding to the at least one SC in the candidate SC set is preconfigured; or the matching condition corresponding to the at least one SC in the candidate SC set is obtained from the registration network element, and the registration network element is configured to store the SC deployed on each of the plurality of BCs managed by the management network element and a matching condition corresponding to the SC deployed on each of the plurality of BCs.

32. The method according to any one of claims 26 to 31, wherein the method further comprises:
sending, by the management network element, second identity information to the second apparatus, wherein the second identity information is information used by another apparatus to determine an identity of the first apparatus, and the another apparatus is an apparatus other than the first apparatus.

33. The method according to any one of claims 26 to 32, wherein the first feedback information further comprises first identity information, and the first identity information is information indicating the identity of the first apparatus.

34. The method according to any one of claims 26 to 33, wherein the method further comprises:
receiving, by the management network element, network exit information from the first apparatus, wherein the network exit information indicates a BC from which the first apparatus expects to exit; and
deleting, by the management network element based on the network exit information, registration information of the first apparatus in the BC from which the first apparatus expects to exit.

35. The method according to claim 34, wherein deleting, by the management network element based on the network exit information, the registration information of the first apparatus in the BC from which the first apparatus expects to exit comprises:
sending, by the management network element, deregistration request information to the registration network element, wherein the deregistration request information comprises information indicating the BC from which the first apparatus expects to exit; and
receiving, by the management network element, a deregistration request confirmation message from the registration network element, wherein the deregistration request confirmation message is used to confirm that the registration information of the first apparatus in the BC from which the first apparatus expects to exit has been deleted.

36. The method according to claim 34 or 35, wherein the method further comprises:
sending, by the management network element, network exit indication information to the second apparatus based on the network exit information, wherein the network exit indication information indicates that the first apparatus detaches from the BC from which the first apparatus expects to exit.

37. The method according to any one of claims 34 to 36, wherein the method further comprises:
sending, by the management network element, network exit confirmation information to the first apparatus, wherein the network exit confirmation information is used to confirm that the registration information of the first apparatus in the BC from which the first apparatus expects to exit has been deleted.

38. A communication method, wherein the method comprises:
receiving, by a second apparatus, second request information from a first apparatus, wherein the second request information is used to request to deploy a first SC in a smart contract SC that the first apparatus expects to deploy, an SC deployed by the second apparatus comprises the first SC, and the first SC is deployed on a first blockchain BC;
sending, by the second apparatus, second feedback information to the first apparatus based on the second request information, wherein the second feedback information comprises data of a BC protocol corresponding to the first BC; and
synchronizing, by the second apparatus, BC data with the first apparatus based on the BC protocol corresponding to the first BC, wherein the BC data comprises data of the first SC.

39. The method according to claim 38, wherein the method further comprises:
receiving, by the second apparatus, second identity information from a management network element, wherein the second identity information is information used by another apparatus to determine an identity of the first apparatus, the another apparatus is an apparatus other than the first apparatus, and a BC managed by the management network element comprises a BC that the second apparatus joins; and correspondingly, sending, by the second apparatus, the second feedback information to the first apparatus based on the second request information comprises:
sending, by the second apparatus, the second feedback information to the first apparatus when the second apparatus determines, based on the second identity information, that identity authentication of the first apparatus succeeds.

40. The method according to claim 38 or 39, wherein the second request information further comprises first identity information, and the first identity information is information indicating the identity of the first apparatus.

41. The method according to any one of claims 38 to 40, wherein the method further comprises:
obtaining, by the second apparatus, network exit indication information, wherein the network exit indication information indicates that the first apparatus detaches from a BC from which the first apparatus expects to exit.

42. The method according to claim 41, wherein the network exit indication information is obtained from the management network element, and the BC managed by the management network element comprises the BC that the second apparatus joins; and the method further comprises:
broadcasting, by the second apparatus based on the network exit indication information, the network exit indication information to a BC node other than the first apparatus in the BC from which the first apparatus expects to exit.

43. A communication apparatus, wherein the communication apparatus comprises a module or a unit configured to perform the method according to any one of claims 17 to 25.

44. A communication apparatus, wherein the communication apparatus comprises a module or a unit configured to perform the method according to any one of claims 26 to 37.

45. A communication apparatus, wherein the communication apparatus comprises a module or a unit configured to perform the method according to any one of claims 38 to 42.

46. A communication apparatus, wherein the communication apparatus comprises a processor; and the processor is configured to: by using a logic circuit and/or executing instructions, enable the communication apparatus to perform the communication method according to any one of claims 17 to 25, enable the communication apparatus to perform the communication method according to any one of claims 26 to 37, or enable the communication apparatus to perform the communication method according to any one of claims 38 to 42.

47. The apparatus according to claim 46, further comprising a memory, wherein the memory is configured to store the instructions.

48. The apparatus according to claim 46 or 47, further comprising a communication interface, wherein the communication interface is configured to input and/or output signaling and/or data.

49. A computer-readable storage medium, wherein the computer-readable storage medium comprises instructions; and when the instructions are run by a processor, the communication method according to any one of claims 17 to 25, the communication method according to any one of claims 26 to 37, or the communication method according to any one of claims 38 to 42 is implemented.

50. A computer program product, wherein the computer program product comprises instructions; and when the instructions are run on a computer, the computer is enabled to perform the communication method according to any one of claims 17 to 25, the computer is enabled to perform the communication method according to any one of claims 26 to 37, or the computer is enabled to perform the communication method according to any one of claims 38 to 42.
